# EUROPEAN PATENT APPLICATION

(11) **EP 4 826 851 A1**
(43) Date of publication of application: **21.10.2026**
(21) Application number: 25797619.1
(22) Date of filing: 27.04.2025
(51) Int. Cl.: H01M 10/6556, H01M 10/613

(54) **BATTERY DEVICE, REFRIGERANT HEAT EXCHANGE DEVICE, AND ELECTRIC DEVICE**

(30) Priority: 28.04.2024 CN 202420907842 U; 21.02.2025 WO PCT/CN2025/078572
(71) Applicant: Contemporary Amperex Technology Co., Limited, Ningde, Fujian 352100 (CN)
(72) Inventor: GAO, Bang, Ningde, Fujian 352100 (CN); ZHANG, Ruitong, Ningde, Fujian 352100 (CN); WANG, Qing, Ningde, Fujian 352100 (CN)
(74) Representative: Kraus & Lederer PartGmbB
(86) International application number: PCT/CN2025/091609
(87) International publication number: WO 2025/228313

(57) **Abstract**

The present application relates to the technical field of battery production, and provides a battery device, a refrigerant heat exchange device, and an electric device. The battery device comprises a case assembly, a battery cell assembly, a refrigerant heat exchange component, and a connector component; the case assembly has an accommodating cavity; the battery cell assembly is accommodated in the accommodating cavity; the refrigerant heat exchange component comprises an inlet and outlet zone, a main flow distribution and collection zone, and a heat exchange zone; the main flow distribution and collection zone is arranged between the inlet and outlet zone and the heat exchange zone, a first-flow-direction flow channel and a second-flow-direction flow channel having opposite refrigerant flow directions are formed in the inlet and outlet zone; the main flow distribution and collection zone comprises at least one first flow channel and at least two second flow channels, all the first flow channels are distributed between all the second flow channels, the heat exchange zone comprises a refrigerant heat exchange flow channel, the first-flow-direction flow channel is communicated with the refrigerant heat exchange flow channel through the first flow channels, and the second-flow-direction flow channel is communicated with the refrigerant heat exchange flow channel through the second flow channels; and the connector component is connected to the refrigerant heat exchange component. The present application aims to improve the temperature uniformity performance of refrigerant heat exchange components.

## Description

The present application claims the priority to the Chinese patent application with the application number 202420907842.4 and the title of "HEAT EXCHANGE APPARATUS, BATTERY, AND ELECTRICAL APPARATUS" filed with the China National Intellectual Property Administration on April 28, 2024, the entire contents of which are incorporated herein by reference; and claims the priority to the international application PCT/CN2025/078572 with the title of "BATTERY APPARATUS, REFRIGERANT HEAT EXCHANGE APPARATUS, AND ELECTRICAL APPARATUS" filed with the China National Intellectual Property Administration on February 21, 2025, the entire contents of which are incorporated herein by reference.

### TECHNICAL FIELD

Battery apparatuses in new energy vehicles will release a large amount of heat during charge-discharge process, so the battery apparatuses are usually equipped with heat exchange components that can perform heat exchange for a battery cell assembly, achieving cooling and temperature reduction of the battery cell assembly through heat exchange.

Generally, a refrigerant heat exchange component has an inlet and outlet zone, within which a plurality of flow channels are arranged, some of these flow channels allow refrigerants to flow into the refrigerant heat exchange component, while the remaining flow channels allow the refrigerants to flow out of the refrigerant heat exchange component. In related technology, a plurality of flow channels that allow the refrigerants to flow in and a plurality of flow channels that allow the refrigerants to flow out are arranged too scattered and disorderly, which easily leads to disorderly downstream distribution, can easily cause uneven distribution, and subsequently affects the temperature uniformity of the refrigerant heat exchange component.

### SUMMARY OF THE INVENTION

An objective of the embodiments of the present application is to provide a battery apparatus, a refrigerant heat exchange apparatus, and an electrical apparatus to solve the technical problem of poor temperature equalization performance of a refrigerant heat exchange component in the battery apparatus.

### Technical solutions

According to the technical solution adopted in the embodiments of the present application,
in a first aspect, the present application provides a battery apparatus, which includes:
a box body assembly having an accommodating cavity;
a battery cell assembly that is accommodated in the accommodating cavity;
a refrigerant heat exchange component which is configured to exchange heat with the battery cell assembly and includes an inlet and outlet zone, a main flow distribution and collection zone, and a heat exchange zone, in which, the main flow distribution and collection zone is arranged between the inlet and outlet zone and the heat exchange zone, a first-flow-direction flow channel and a second-flow-direction flow channel that are both for refrigerant circulation are formed in the inlet and outlet zone, the flowing direction of a refrigerant in the first-flow-direction flow channel is opposite to that of the refrigerant in the second-flow-direction flow channel, the main flow distribution and collection zone includes at least one first flow channel and at least two second flow channels, all the first flow channels are distributed between all the second flow channels, the heat exchange zone includes a refrigerant heat exchange flow channel, the first-flow-direction flow channel is in communication with the refrigerant heat exchange flow channel through the first flow channels, and the second-flow-direction flow channel is in communication with the refrigerant heat exchange flow channel through the second flow channels; and
a connector component that is connected to the refrigerant heat exchange component and is in communication with the first-flow-direction flow channel and the second-flow-direction flow channel.

In the embodiments, all first flow channels are uniformly distributed between all second flow channels, such that under a cold-zone operating condition of the battery apparatus, it is convenient to distribute flow from the middle, and overheated parts on the refrigerant heat exchange component are conveniently distributed at an edge position, which is conducive to achieving balanced heat exchange; in addition, under a heating condition of the battery apparatus, a battery cell with relatively low temperature at the edge position can be heated firstly, thereby improving the effect of balanced heat exchange of the refrigerant heat exchange component on the battery cell assembly.

In one embodiment, the number of the second flow channels is an even number, and all the second flow channels are symmetrically arranged on both sides of all the first flow channels.

In this embodiment, the number of the second flow channels is the even number, thereby facilitating the symmetrical arrangement of the second flow channels on both sides of the plurality of first flow channel, and making it convenient to distribute the flow in a centralized and symmetrical manner.

In one embodiment, the first flow channels each include a first flow distribution channel and a plurality of second flow distribution channels, and the first flow distribution channel is in communication with the plurality of second flow distribution channels; the first flow distribution channel extends in a second direction, and each second flow distribution channel extends in a first direction; an end of the first flow distribution channel away from the second flow distribution channels corresponds to and is in communication with the first-flow-direction flow channel; and the end of each second flow distribution channel away from the first flow distribution channel is in communication with the refrigerant heat exchange flow channel in the heat exchange zone; and the second direction is perpendicular to the first direction.

In this embodiment, the first flow distribution channel extends in the second direction, and the plurality of second flow distribution channels can be arranged at intervals in the second direction and then are in communication with the first flow distribution channel, such that a distribution area of a flow distribution zone is increased, the refrigerant flowing smoothness is improved, and a larger flowing area is formed in the heat exchange zone.

In one embodiment, at least one first-flow-direction flow channel is arranged, at least two second-flow-direction flow channels are arranged, and all the first-flow-direction flow channels are distributed between all the second-flow-direction flow channels.

In this embodiment, all the first-flow-direction flow channels are distributed between all the second-flow-direction flow channels, thus under the cold-zone operating of the battery apparatus, it is convenient to introduce a refrigerant from the middle part through the first-flow-direction flow channels and the first-flow-direction flow channels are in communication and matched with the first flow channels in the middle, the overheated parts on the refrigerant heat exchange component are conveniently distributed at an edge position, which is conducive to achieving balanced heat exchange; in addition, under the heating condition of the battery apparatus, the second-flow-direction flow channels are in communication with the second flow channels at the outside, thus the refrigerant can be distributed to the edge position of the refrigerant heat exchange component, the battery cell with relatively low temperature at the edge position can be heated firstly, thereby improving the balanced heat exchange effect of the refrigerant heat exchange component on the battery cell assembly.

In one embodiment, the first-flow-direction flow channels and the second-flow-direction flow channels extend in the first direction.

In this embodiments, the first-flow-direction flow channels and the second-flow-direction flow channels are arranged in parallel and at intervals, so that the regularity of the flow channel arrangement is improved, and the space can be saved.

In one embodiment, the heat exchange zone includes two guide flow channels and a plurality of main heat exchange flow channels; the plurality of main heat exchange flow channels are arranged and connected in parallel in the second direction, and each main heat exchange flow channel is distributed between the two guide flow channels in the second direction; in the first direction, each main heat exchange flow channel is provided with connecting ends which are arranged away from each other, and each second flow distribution channel is correspondingly connected to one connecting end of each main heat exchange flow channel; and one end of each guide flow channel is correspondingly connected to the other connecting end of part of the main heat exchange flow channels, and the other end of each guide flow channel is correspondingly connected to each second flow channel.

In this embodiment, the plurality of main heat exchange flow channels are arranged between two guide flow channels, so that a main zone for carrying out heat exchange on the battery cell assembly is formed in the zone between the two guide flow channels, which is conducive to improve the heat exchange concentration; the guide flow channels are located at the edge positions, play roles of centralized confluence and flow distribution, and are favorable for reducing the overheating problem during a cooling process as well as reducing the problem of heat exchange imbalance during heating and cooling processes.

In one embodiment, an intersection zone is formed at a position where the main flow distribution and collection zone intersects with the heat exchange zone, and the intersection zone extends in the second direction; a first node portion is formed at a position where each second flow distribution channel is connected to each main heat exchange flow channel, and a second node portion is formed at a position where the guide flow channel is connected to the second flow channel; and the first node portions and the second node portions are all distributed in the intersection zone.

In this embodiment, the first node portions connected between the second flow distribution channels and the main heat exchange flow channels are all arranged in the intersection zone to avoid the heat exchange zone, such that the resistance and pressure loss of the refrigerant in the refrigerant heat exchange flow channel of the heat exchange zone can be reduced, and the refrigerant can flow more smoothly, thereby improving the uniformity of temperature distribution on the refrigerant heat exchange component, improving the heat exchange efficiency, and achieving the purpose of carrying out balanced and rapid heat exchange on the battery cell assembly.

In one embodiment, each main heat exchange flow channel includes an upstream flow channel and a downstream flow channel which extend in the first direction and are arranged at an interval in the second direction, and the upstream flow channel and the downstream flow channel are in communication with each other at their ends away from the inlet and outlet zone; and the guide flow channels are connected to the downstream flow channels, and the second flow distribution channels are connected to the upstream flow channels.

In this embodiment, the upstream flow channel and the downstream flow channel in each main heat exchange flow channel are arranged at the interval in the second direction, so that a certain flow channel coverage area is formed in the second direction, the refrigerant in each main heat exchange flow channel can flow independently, thereby making the refrigerant flow more smoothly.

In one embodiment, the upstream flow channels each include a plurality of upstream flow sub-channels which extend in the first direction and are arranged at intervals in the second direction, and all the upstream flow sub-channels are in communication with each other; and/or, the downstream flow channels each include a plurality of downstream flow sub-channels which extend in the first direction and are arranged at intervals in the second direction, and all the downstream flow sub-channels are in communication with each other.

In this embodiment, each the upstream flow channel is connected in a mode that the plurality of upstream flow sub-channels are connected in parallel, each downstream flow channel is connected in a mode that the plurality of downstream flow sub-channels are connected in parallel, and therefore the flowing efficiency can be improved, and the heat exchange efficiency can be improved.

In one embodiment, the upstream flow channels in part of the main heat exchange flow channels are adjacent to and in heat conduction fit with the downstream flow channels in the adjacent main heat exchange flow channels, and the downstream flow channels in part of the main heat exchange flow channels are adjacent to and in heat conduction fit with the upstream flow channels in the adjacent main heat exchange flow channels.

In this embodiment, the upstream flow channels and the downstream flow channels in the two main heat exchange flow channels are adjacently arranged, high temperature of the downstream flow channels can be balanced through the low temperature of the upstream flow channels, and the temperature of the zone on a heat exchange surface corresponding to the downstream flow channels decreases, and therefore an overheated zone is not prone to being formed, the area of the overheated zone is relatively reduced, the heat exchange effect on the battery cell assembly can be improved, the temperature distribution on the heat exchange surface of the refrigerant heat exchange component is more uniform, and the heat exchange uniformity on the battery cell assembly is improved.

In one embodiment, the battery cell assembly includes a plurality of battery cell groups, each battery cell group includes a plurality of battery cells stacked in the first direction, and the plurality of battery cell groups are arranged side by side in the second direction; the refrigerant heat exchange component is provided with a first surface which is opposite to the battery cell assembly; and a projection zone of each battery cell group on the first surface covers at least one main heat exchange flow channel.

In this embodiment, the battery cell assembly is arranged to be formed by the plurality of battery cell groups, and an extension direction of each main heat exchange flow channel is consistent with an arrangement direction of the plurality of battery cells in each battery cell group, such that the plurality of battery cells in each battery cell group have a larger heat exchange area with the main heat exchange flow channel, and each main heat exchange flow channel can exchange heat for each battery cell group in a more targeted manner, thereby improving the effect of balanced heat exchange.

In one embodiment, the box body assembly is further provided with a mounting cavity, and the connector component is at least partially accommodated in the mounting cavity.

In this embodiment, the mounting cavity is arranged and can accommodate at least part of the connector component, thereby increasing the space utilization rate and reducing the risk of interference between the connector component and other external components.

In one embodiment, the refrigerant heat exchange component is provided with a first surface and a second surface which are opposite to each other, and the first surface is arranged opposite to the battery cell assembly; and the refrigerant heat exchange component includes a plurality of mounting holes, and the plurality of mounting holes are arranged between the first surface and the second surface in a penetrating manner and avoid the first-flow-direction flow channels, the second-flow-direction flow channels, the first flow channels, the second flow channels, and the refrigerant heat exchange flow channels.

In the embodiment, the mounting holes are formed so that the refrigerant heat exchange component can be fixedly connected to other components by locking members such as bolts, thereby facilitating connection between the refrigerant heat exchange component and other components.

In one embodiment, in the first direction, the plurality of mounting holes are formed in a middle zone of the refrigerant heat exchange component and are arranged at intervals in the second direction; and/or, in the second direction, the plurality of mounting holes are formed in the middle zone of the refrigerant heat exchange component and are arranged at intervals in the first direction; and the second direction is perpendicular to the first direction.

In this embodiment, the plurality of mounting holes are formed in the middle of the refrigerant heat exchange component and can be evenly distributed at intervals, so that the stress balance of the refrigerant heat exchange component can be improved, and the layout between the main heat exchange flow channel and the mounting holes can be more regular.

In one embodiment, a plurality of cavities are further formed in the refrigerant heat exchange component, and each cavity is arranged to avoid the first-flow-direction flow channels, the second-flow-direction flow channels, the first flow channels, the second flow channels, and the refrigerant heat exchange flow channels.

In this embodiment, the plurality of cavities are formed, thus flow guide and exhaust effects can be achieved during the welding process, the welding quality and welding sealing performance can be improved, and moreover, the overall structural strength of the refrigerant heat exchange component can be improved.

In a second aspect, the present application provides a refrigerant heat exchange apparatus, which includes the refrigerant heat exchange component in any battery apparatus as described above.

In a third aspect, the present application provides an electrical apparatus, which includes any battery apparatus as described above, and the battery apparatus is configured to store or provide electric energy.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### BRIEF DESCRIPTION OF THE DRAWINGS

In order to more clearly illustrate the technical solution of the embodiments of the present application, the accompanying drawings that need to be used in the embodiments of the present application or existing technologies will be briefly introduced below, and it is obvious that the accompanying drawings described below are only some embodiments of the present application, and for those skilled in the art, other accompanying drawings can also be obtained according to the accompanying drawings without paying creative labor.
FIG. 1 is a structural schematic diagram of a vehicle provided by some embodiments of the present application;
FIG. 2 is an exploded schematic structural diagram 1 of a battery apparatus provided by some embodiments of the present application;
FIG. 3 is an exploded schematic structural diagram 2 of a battery apparatus provided by some embodiments of the present application;
FIG. 4 is an exploded schematic structural diagram of a refrigerant heat exchange component in a battery apparatus provided by some embodiments of the present application;
FIG. 5 is a schematic structural diagram 1 of a refrigerant heat exchange flow channel in a refrigerant heat exchange component in a battery apparatus provided by some embodiments of the present application;
FIG. 6 is a schematic diagram 1 of relative positions of a first-flow-direction flow channel and a second-flow-direction flow channel in an inlet and outlet zone of a refrigerant heat exchange component in a battery apparatus provided by some embodiments of the present application;
FIG. 7 is a schematic diagram 2 of relative positions of a first-flow-direction flow channel and a second-flow-direction flow channel in an inlet and outlet zone of a refrigerant heat exchange component in a battery apparatus provided by some embodiments of the present application;
FIG. 8 is a schematic structural diagram 2 of a refrigerant heat exchange flow channel in a refrigerant heat exchange component in a battery apparatus provided by some embodiments of the present application;
FIG. 9 is a schematic diagram of relative positions of a first flow channel and a second flow channel in a main flow distribution and collection area of a refrigerant heat exchange component in a battery apparatus provided by some embodiments of the present application;
FIG. 10 is a schematic diagram of relative positions of a main heat exchange flow channel and a guide flow channel in a heat exchange zone of a refrigerant heat exchange component in a battery apparatus provided by some embodiments of the present application;
FIG. 11 is a schematic structural diagram of a main heat exchange flow channel in a heat exchange zone of a refrigerant heat exchange component in a battery apparatus provided by some embodiments of the present application;
FIG. 12 is a diagram of relative positions of a refrigerant heat exchange flow channel and a battery cell assembly in a battery apparatus provided by some embodiments of the present application;
FIG. 13 is a front view of a refrigerant heat exchange component in a battery apparatus provided by some embodiments of the present application;
FIG. 14 is a schematic diagram 1 of distribution of mounting holes in a refrigerant heat exchange component in a battery apparatus provided by some embodiments of the present application;
FIG. 15 is a schematic diagram 1 of distribution of mounting holes in a refrigerant heat exchange component in a battery apparatus provided by some embodiments of the present application;
FIG. 16 is a schematic diagram 3 of distribution of mounting holes in a refrigerant heat exchange component in a battery apparatus provided by some embodiments of the present application; and
FIG. 17 is a schematic diagram of internal temperature distribution of a refrigerant heat exchange component in a battery apparatus provided by some embodiments of the present application.

### Reference numerals:

1000, vehicle; 1100, battery apparatus; 1110, battery cell assembly; 1111, battery cell group; 1112, battery cell; 1120, box body assembly; 1121, box body; 1122, cover body; 1123, box frame; 1124, accommodating cavity; 1130, refrigerant heat exchange component; 1131, inlet and outlet zone; 11311, first-flow-direction flow channel; 11312, second-flow-direction flow channel; 1132, main flow distribution and collection zone; 11321, first flow channel; 11322, second flow channel; 11323, first flow distribution channel; 11324, second flow distribution channel; 1133, heat exchange zone; 11331, main heat exchange flow channel; 11332, guide flow channel; 11333, upstream flow channel; 11334, downstream flow channel; 11335, upstream flow sub-channel; 11336, downstream flow sub-channel; 11337, intersection zone; 11338, first node portion; 11339, second node portion; 11340, third node portion; 11341, refrigerant heat exchange flow channel; 1134, heat exchange surface; 1135, first surface; 1136, first sub-component; 1137, second sub-component; 1138, cavity; 1139, mounting hole; 1140, connector component; 1200, controller; 1300, motor; X, first direction; and Y, second direction.

### DETAILED DESCRIPTION

Embodiments in technical solutions of the present application will be described in detail below in conjunction with the accompanying drawings. The following embodiments are only used for more clearly illustrating the technical solution of the present application and are therefore only embodiments and not to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings and in the description thereof, and any variations thereof, are intended to cover non-exclusive inclusions.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

Battery apparatuses in new energy vehicles will release a large amount of heat during charge-discharge process, so the battery apparatuses are usually equipped with heat exchange components that can perform heat exchange for a battery cell assembly, achieving cooling and temperature reduction of the battery cell assembly through heat exchange.

Generally, a refrigerant heat exchange component has a main flow distribution and collection zone, within which a plurality of flow channels are arranged, some of these flow channels allow refrigerants to flow into the heat exchange component in a distributed manner, while the remaining flow channels allow the refrigerants to flow out of the heat exchange component in a centralized manner. In related technology, a plurality of flow channels that allow the refrigerants to flow in and a plurality of flow channels that allow the refrigerants to flow out are arranged too scattered and disorderly, which easily leads to a disorderly distribution of upstream and downstream flow channels connected to the main flow distribution and collection area, can easily cause uneven distribution, and subsequently affects the temperature uniformity of the heat exchange component.

For example, the main manifold collection area has four channels, two of which allow the refrigerants to flow in and distribute the refrigerant, and the two flow channels are defined as first-flow-direction flow channels, while the other two allow the refrigerants to flow out and converge the refrigerant and are defined as second-flow-direction flow channels; if in a certain direction, the four channels are arranged alternately, such as a first flow channel, a second flow channel, the first flow channel, and the second flow channel, if connection to the downstream flow channels occurs, it easily causes interleaving between adjacent channels, making the distribution too scattered and not centralized, which is very likely to lead to uneven distribution; in addition, crossovers can easily occur between flow distribution channels and flow collection channels, or detours may be required, resulting in considerable difficulty for subsequent distribution, increasing the complexity of subsequent flow distribution layout, and being unfavorable for simplifying the structure.

The present application provides a battery apparatus, the first flow channels having the same flow direction are arranged in zone between the second flow channels within the main flow distribution and collection zone, which facilitates a more centralized arrangement of the first flow channels with the same flow direction; the second flow channels form an enclosure around the outside of the first flow channels; the centrally arranged first flow channels can more effectively distribute or collect flow, thus allowing for symmetrical flow distribution and collection, achieving balanced flow distribution and collection, which helps improve the uniformity of the temperature distribution on the refrigerant heat exchanger components.

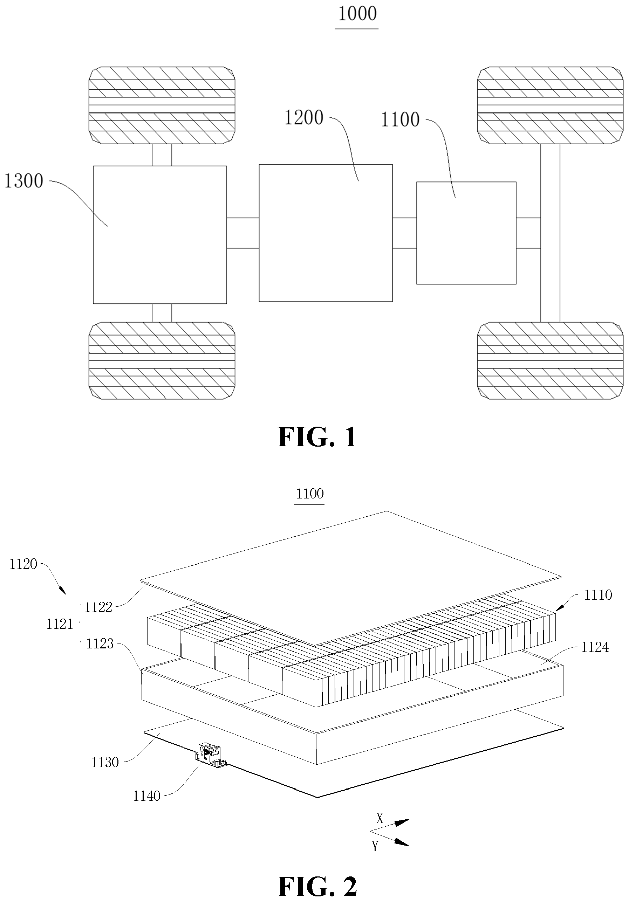

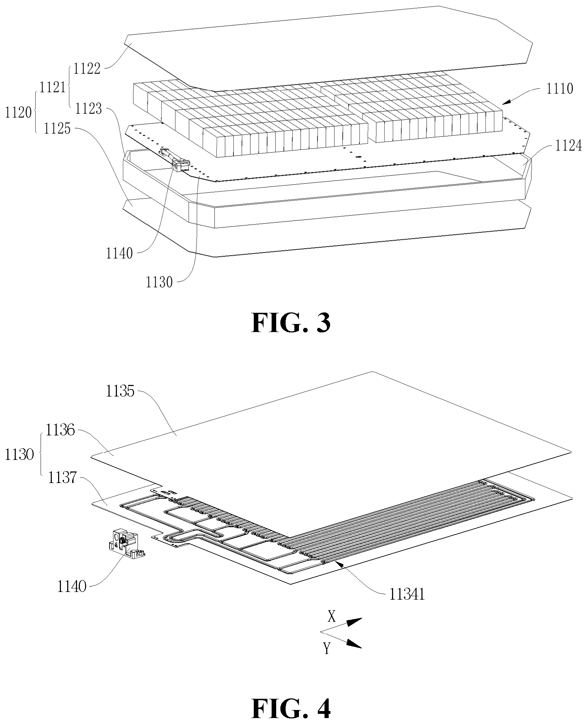

Specifically, as shown in FIG. 2 and FIG. 3, the embodiment of the present application provides a battery apparatus 1100, which may include one or more battery cell assemblies 1110 for providing voltage and capacity; the battery cell assemblies 1110 may include a plurality of battery cells 1112 which are connected in series, parallel, or in series-parallel connection through a busbar component. The battery apparatus 1100 may also be a battery pack, which generally includes a box body assembly 1120 and one or more battery cell assemblies 1110, with the battery cell assemblies 1110 accommodated within the box body assembly 1120.

The battery apparatus 1100 disclosed by the embodiment of the present application can be used in an electrical apparatus that uses the battery apparatus 1100 as a power source and various energy storage apparatuses and energy storage systems that use the battery apparatus 1100 as an energy storage element. The electrical apparatuses may include, but are not limited to, mobile phones, portable devices, laptops, electric toys, power tools, electric vehicles, vehicle 1000, ships, spacecraft, and so on. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

For the convenience of description in the following embodiments, an electrical apparatus being a vehicle 1000 according to an embodiment of the present application is taken as an example for the description.

FIG. 1 is referred, and FIG. 1 is a schematic structural diagram of a vehicle 1000 provided by some embodiments of the present application. The vehicle 1000 may be a fuel vehicle, a gas vehicle, or a new energy vehicle. The new energy vehicle may be an all-electric vehicle, a hybrid vehicle, an extended-range electric vehicle, or the like. A battery apparatus 1100 is arranged in the vehicle 1000. The battery apparatus 1100 may be arranged at the bottom, head, or tail of the vehicle 1000. The battery apparatus 1100 may be configured to supply power to the vehicle 1000. For example, the battery apparatus 1100 may be used as an operating power source of the vehicle 1000. The vehicle 1000 may further include a controller 1200 and a motor 1300. The controller 1200 is configured to control the battery apparatus 1100 to supply power to the motor 1300, for example, for the operating power demand when the vehicle 1000 is starting, navigating, and driving.

In some embodiments of the present application, the battery apparatus 1100 can serve as the operation power source of the vehicle 1000 and can also serve as a driving power source of the vehicle 1000, and replaces or partially replace fuel oil or natural gas to provide driving power for the vehicle 1000.

As shown in FIG. 2 and FIG. 3, FIG. 2 and FIG. 3 are exploded schematic structural diagrams of the battery apparatus 1100 provided by some embodiments of the present application. In one embodiment, the battery apparatus 1100 includes a box body assembly 1120 and a battery cell assembly 1110; an accommodating cavity 1124 is formed within the box body assembly 1120, and the battery cell groups 1111 are placed in the accommodating cavity 1124; the battery cell assembly 1110 is generally formed by arranging a plurality of battery cells 1112, or, the battery cell assembly 1110 can also be a battery module, which is formed by arranging and fixing the plurality of battery cells 1112 into an independent module. The box body assembly 1120 is configured to provide the accommodating cavity 1124 for the battery cell assembly 1110, and the box body assembly 1120 can be of various structures.

The battery cell 1112 refers to the smallest unit that makes up the battery apparatus 1100. Each battery cell 1112 can be a secondary battery cell or a primary battery cell; it can also be a lithium-sulfur battery cell, a sodium-ion battery cell, or a magnesium-ion battery cell, but not limited thereto. The battery cell 1112 can be in a cylinder shape, a flat body shape, a cuboid shape or other shapes.

According to some embodiments of the present application, as shown in FIG. 2 to FIG. 5, FIG. 8, and FIG. 9, the embodiment of the present application provides the battery apparatus 1100. The battery apparatus 1100 includes a box body assembly 1120, the battery cell assembly 1110, a refrigerant heat exchange component 1130, and a connector component 1140; the box body assembly 1120 has the accommodating cavity 1124; the battery cell assembly 1110 is accommodated in the accommodating cavity 1124; the refrigerant heat exchange component 1130 is configured to exchange heat with the battery cell assembly 1110; the refrigerant heat exchange component 1130 includes an inlet and outlet zone 1131, a main flow distribution and collection zone 1132, and a heat exchange zone 1133; the main flow distribution and collection zone 1132 is arranged between the inlet and outlet zone 1131 and the heat exchange zone 1133; a first-flow-direction flow channel 11311 and a second-flow-direction flow channel 11312 that are both for refrigerant circulation are formed in the inlet and outlet zone 1131, and the flowing direction of the refrigerants in the first-flow-direction flow channel 11311 is opposite to that of the refrigerants in the second-flow-direction flow channel 11312; the main flow distribution and collection zone 1132 includes at least one first flow channel 11321 and at least two second flow channels 11322, all the first flow channels 11321 are distributed between all the second flow channels 11322, the heat exchange zone 1133 includes a refrigerant heat exchange flow channel 11341, the first-flow-direction flow channel 11311 is in communication with the refrigerant heat exchange channel 11341 through the corresponding first flow channel 11321, and the second-flow-direction flow channel 11312 is in communication with the refrigerant heat exchange flow channel 11341 through the corresponding second flow channel 11322; and the connector component 1140 is connected to the refrigerant heat exchange component 1130 and is in communication with the first-flow-direction flow channel 11311 and the second-flow-direction flow channel 11312.

Specifically, the battery cell assembly 1110 includes one or more battery cells 1112, and the refrigerant heat exchange component 1130 needs to exchange heat with the battery cell assembly 1110, so that it is needed to arrange the refrigerant heat exchange component 1130 close to the battery cell assembly 1110, or, it is needed to arrange the refrigerant heat exchange component 1130 in direct contact with or abutting against the battery cell assembly 1110, thereby improving the heat exchange effect. If the refrigerant heat exchange component 1130 exchanges heat with the battery cell assembly 1110, it needs a large heat exchange zone between the refrigerant heat exchange component 1130 and the battery cells 1112 to improve the heat exchange effect, so that a heat exchange surface 1134 close to or in contact with the surface of the battery cells 1112 is formed on the refrigerant heat exchange component 1130. For example, the refrigerant heat exchange component 1130 has a first surface 1135, the battery cell assembly 1110 is also arranged opposite to the first surface 1135, and the heat exchange surface 1134 is a part of the zone on the first surface 1135.

Taking the battery apparatus 1100 that is horizontally arranged as an example, the surfaces of the battery cells 1112 close to or in contact with the heat exchange surface 1134 can be bottom surfaces of the battery cells 1112, that is, the refrigerant heat exchange component 1130 can be located at the bottom of the battery cell assembly 1110, and the refrigerant heat exchange component 1130 located at the bottom of the battery cell assembly 1110 can be generally also called a heat exchange bottom plate or a cooling bottom plate.

For ease of explanation, the following embodiments are described using an example in which the battery apparatus 1100 in one embodiment of the present application is placed horizontally, and the refrigerant heat exchange component 1130 is located at the bottom of the battery cell assembly 1110.

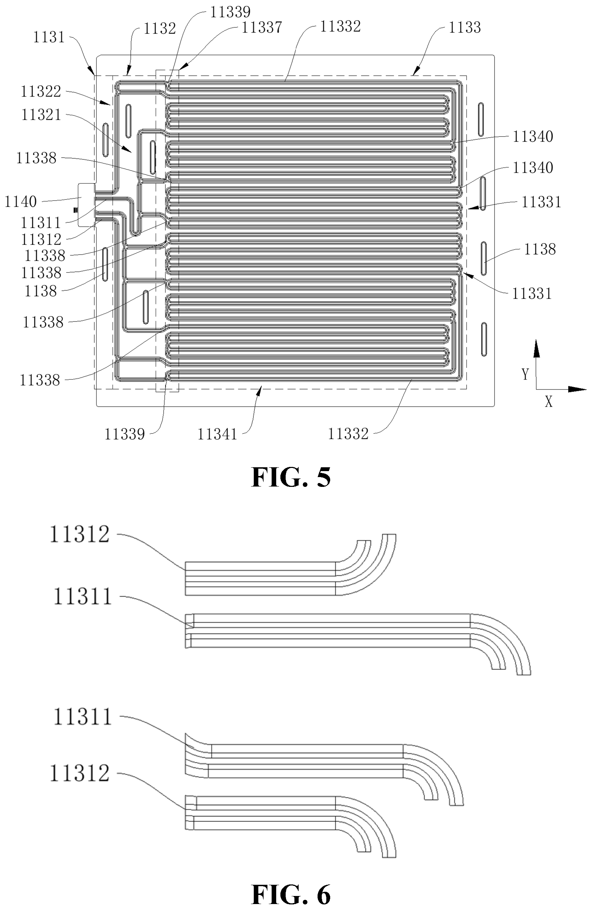

In terms of the refrigerant heat exchange component 1130, as shown in FIG. 5, FIG. 8, and FIG. 13, the refrigerant heat exchange component 1130 includes the heat exchange zone 1133, the refrigerant heat exchange flow channel 11341 is distributed in the heat exchange zone 1133, and the refrigerant flows in the refrigerant heat exchange flow channel 11341; the heat exchange zone 1133 is mainly configured to allow heat exchange with the battery cell assembly 1110, and the heat exchange surface 1134 is distributed in the heat exchange zone 1133.

The refrigerant heat exchange flow channel 11341 can be of a hole structure in the refrigerant heat exchange component 1130, for example, the refrigerant heat exchange component 1130 is plate-shaped, and a through hole structure or a cavity structure with a certain extension length and an extension path is formed in the plate of the refrigerant heat exchange component 1130 and forms the refrigerant heat exchange flow channel 11341. The refrigerant heat exchange component 1130 can be of an integrated structure, and the refrigerant heat exchange flow channel 11341 can be prepared in a gas-assisted or water-assisted molding mode; or, the refrigerant heat exchange component 1130 can be subjected to a combined molding mode. For example, the refrigerant heat exchange component 1130 includes a first sub-component 1136 and a second sub-component 1137; a groove structure with a preset extension length and an extension shape is formed in the second sub-component 1137, and the groove structure can be prepared in a punch molding mode; the first sub-component 1136 and the second sub-component 1137 are fixedly or detachably connected, and a notch of the groove structure is closed to form the through hole structure or the cavity structure, namely, the refrigerant heat exchange flow channel 11341 is formed. The refrigerant heat exchange flow channel 11341 is to be close to the first surface 1135, and an extension path of the refrigerant heat exchange flow channel 11341 can be parallel to the first surface 1135, such that the heat exchange effect is improved. The battery cell assembly 1110 and the first surface 1135 are oppositely arranged.

For example, the first sub-component 1136 can be an upper plate, the second sub-component 1137 can be a lower plate, and the refrigerant heat exchange flow channel 11341 is formed on the lower plate in the punch molding mode. The first sub-component 1136 and the second sub-component 1137 can be welded by brazing, and the welded zone can support heat transfer.

In terms of the inlet and outlet zone 1131, the inlet and outlet zone 1131 is mainly configured to lead in and lead out the refrigerants, therefore, a flow channel for leading in the refrigerants and a flow channel for leading out the refrigerants are to be arranged in the inlet and outlet zone 1131, and the flowing direction of the refrigerants in the flow channel for leading in the refrigerants is to be opposite to the flowing direction of the refrigerants in the flow channel for leading out the refrigerants; therefore, in this example, the flow channel for leading in the refrigerants and the flow channel for leading out the refrigerants are correspondingly defined as a first-flow-direction flow channel 11311 and a second-flow-direction flow channel 11312, and the flowing direction of the refrigerants in the first-flow-direction flow channel 11311 is opposite to the flowing direction of the refrigerants in the second-flow-direction flow channel 11312.

Generally, due to large flow rate of the refrigerants, it is needed to configure one or more first-flow-direction flow channels 11311 and a plurality of second-flow-direction flow channels 11312 to simultaneously input and output the refrigerants, so as to meet the refrigerant delivery volume and reduce the congestion and increased resistance that occur when using a single channel for delivery.

In terms of the main flow distribution and collection area 1132, the main flow distribution and collection area 1132 is arranged between the inlet and outlet zone 1131 and the heat exchange zone 1133 and configured to perform flow distribution and collection. Specifically, one or more first flow channels 11321 and the plurality of second flow channels 11322 are arranged in the main flow distribution and collection area 1132, the first flow channels 11321 are to be as many as the first-flow-direction flow channels 11311, and are in matched connection with the first-flow-direction flow channels 11311. It is described by taking the first flow channels 11321 as flow channels for flow distribution and the second flow channels 11322 as flow channels for flow collection, the first-flow-direction flow channels 11311 are inlet flow channels for introducing the refrigerants, and the second-flow-direction flow channels 11312 are outlet flow channels for leading out the refrigerants; each first-flow-direction flow channels 11311 is connected to the corresponding first flow channel 11321, the number of the first-flow-direction flow channels 11311 is to be equal to the number of the first flow channels 11321, and the first flow channels 11321 are configured to receive the refrigerants flowing out of the first-flow-direction flow channels 11311 and distribute the refrigerants into the refrigerant heat exchange flow channel 11341; and each second-flow-direction flow channel 11312 is connected to the corresponding second flow channel 11322, the number of the second-flow-direction flow channels 11312 is to be equal to the number of the second flow channels 11322, and the second flow channels 11322 are configured to receive the refrigerants flowing out of the refrigerant heat exchange flow channel 11341 and convey the refrigerants into the second-flow-direction flow channels 11312 in a centralized mode.

In the main flow distribution and collection area 1132, if a plurality of first flow channels 11321 and a plurality of second flow channels 11322 are provided, the plurality of first flow channels 11321 are adjacently arranged and distributed between all the second flow channels, that is, all the first flow channels 11321 are distributed between every two adjacent second flow channels 11322 in the plurality of second flow channels 11322, thus realizing centralized distribution of the plurality of first flow channels 11321. For example, during cooling the battery cell assembly 1110, the refrigerants are guided in through the first-flow-direction flow channels 11311, and the refrigerants are distributed through the first flow channels 11321, the plurality of first flow channels 11321 are distributed in a centralized way to achieve centralized distribution of the refrigerants; all the first flow channels 11321 are arranged between two second flow channels 11322, and thus the refrigerants can be distributed, spread, and conveyed from the middle to the outside in a centralized manner and are conveyed to the refrigerant heat exchange flow channel 11341 in each heat exchange zone 1133. It is to be understood that the plurality of second flow channels 11322 are distributed at the edge positions of both sides, the second flow channels 11322 and the first flow channels 11321 do not intersect or stagger, mutual avoidance between the first flow channels 11321 and the second flow channels 11322 is well realized, and the layout is more reasonable; and in addition, because a backflow part in the refrigerant heat exchange flow channel 11341 is easily overheated, in this example, the plurality of second flow channels 11322 are distributed at the edge positions of both sides, so that the backflow part of the refrigerant heat exchange flow channel 11341 in the heat exchange zone 1133 can be arranged at the edge position of the refrigerant heat exchange component 1130, therefore, the overheated part on the refrigerant heat exchange component 1130 can correspond to the edge position of the battery cell assembly 1110, or the overheated part on the refrigerant heat exchange component 1130 can directly avoid the battery cell assembly 1110, thereby reducing the influence of the overheated part on heat exchange of the battery cell assembly 1110.

During heating the battery cell assembly 1110, the refrigerants can be guided out through the first-flow-direction flow channel 11311, and the refrigerants can be guided in through the second-flow-direction flow channel 11312; and therefore, the first flow channels 11321 are configured to collect the refrigerants, and the second flow channels 11322 are configured to distribute the refrigerants. It is known that all the first flow channels 11321 are arranged in the middle zone between the two second flow channels 11322 in a centralized mode, that is, the plurality of second flow channels 11322 are distributed at the edge positions of both sides of the middle zone. According to the above arrangement, because the battery cell assembly 1110 is in a low-temperature state, the battery cells 1112 at the edge positions in the battery cell assembly 1110 generally make contact with the box body assembly 1120 that is made of metal, the temperature of the battery cells 1112 located at the edge positions is less than that of the battery cells 1112 located in the middle zone; and therefore, during heating, the battery cells 1112 located at the edge positions are preferentially heated, which is conducive to reducing the temperature difference of the refrigerants at an inlet position and an outlet position of the connector component 1140.

In addition, by means of the structural form that the plurality first flow channels 11321 are adjacently arranged and all distributed between any two adjacent second flow channels 11322 (or are understood as being distributed between all the second flow channels 11322), the second flow channels 11322 and the first flow channels 11321 are not prone to being crossed or staggered, thus mutual avoidance between the first flow channels 11321 and the second flow channels 11322 is well achieved, and the layout is more reasonable.

In terms of the connector component 1140, the connector component 1140 is connected to the refrigerant heat exchange component 1130 and is connected to an external refrigerant conveying apparatus for conveying the refrigerants, and thus the refrigerants can enter the refrigerant heat exchange component 1130 through the connector component 1140. Therefore, it can be known that the interior of the connector component 1140 is certainly provided with the plurality of flow channels to realize communication with the first-flow-direction flow channel 11311 and the second-flow-direction flow channel 11312 correspondingly.

In the embodiments, all first flow channels 11321 are uniformly distributed between two adjacent second flow channels 11322 (or are understood to be distributed in all the second flow channels 11322), such that under a cold-zone operating condition of the battery apparatus 1100, it is convenient to distribute flow from the middle, and the overheated parts on the refrigerant heat exchange component 1130 are conveniently distributed at the edge position, which is conducive to achieving balanced heat exchange; in addition, under a heating condition of the battery apparatus 1100, the battery cells 1112 with relatively low temperature at the edge position can be heated firstly, thereby improving the effect of balanced heat exchange of the refrigerant heat exchange component 1130 on the battery cell assembly 1110.

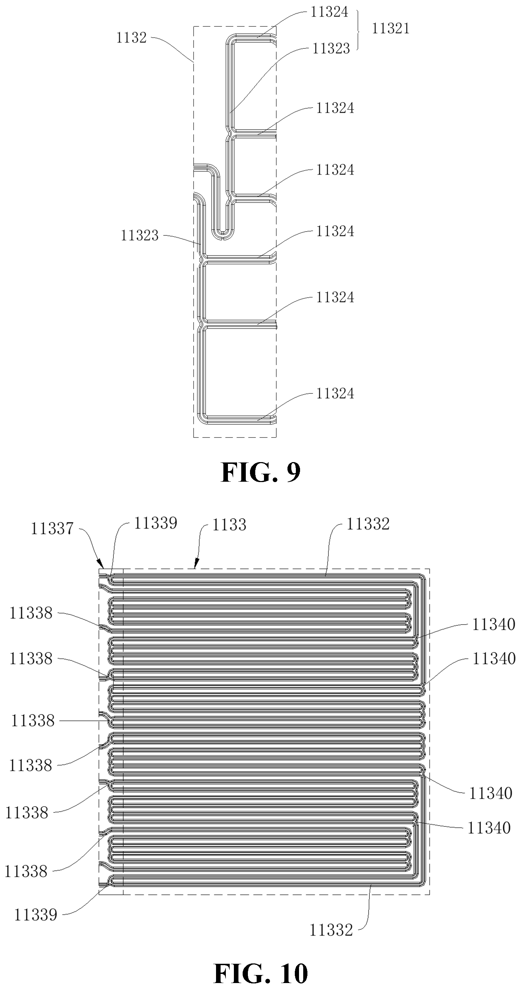

In some embodiments, as shown in FIG. 5 and FIG. 9, the number of the second flow channels 11322 is an even number, and the plurality of second flow channels 11322 are symmetrically arranged on both sides of all the first flow channels 11321.

The plurality of second flow channels 11322 are provided, for example, the number of the second flow channels 11322 can be any integer greater than 1, such as 2, 3, 4, or 5. That is, the second flow channels 11322 on both sides of the plurality of first flow channels 11321 can be arranged asymmetrically; for example, one side may have one second flow channel 11322, while the other side may have two second flow channels 11322.

However, because the structure of the battery cell assembly 1110 generally has a central zone and zones symmetrically distributed on both sides of the central zone, it is generally needed to symmetrically arrange the refrigerant heat exchange flow channels 11341 corresponding to the structure of the battery cell assembly 1110; therefore, in order to facilitate symmetrical distribution, the number of the second flow channels 11322 is controlled to be even, making it easier to symmetrically arrange the plurality of second flow channels 11322 on both sides of the first flow channels 11321.

In the embodiments, the number of the second flow channels 11322 is an even number, thereby facilitating the symmetrical arrangement of the second-flow-direction flow channels 11312 on both sides of the first flow channels 11321, and making it convenient to distribute the flow in a centralized and symmetrical manner.

In some embodiments, as shown in FIG. 5, FIG. 8, FIG. 9, and FIG. 12, the first flow channels 11321 each include a first flow distribution channel 11323 and a plurality of second flow distribution channels 11324, and the first flow distribution channel 11323 is in communication with the plurality of second flow distribution channels 11324; the first flow distribution channel 11323 extends in a second direction Y, and each second flow distribution channel 11324 extends in a first direction X; an end of the first flow distribution channel 11323 away from the second flow distribution channels 11324 corresponds to and is in communication with the first-flow-direction flow channel 11311; and the end of each second flow distribution channel 11324 away from the first flow distribution channel 11323 is in communication with the refrigerant heat exchange flow channel 11341 in the heat exchange zone 1133; and the second direction Y is perpendicular to the first direction X.

Specifically, the first direction X and the second direction Y are two directions perpendicular to each other, and the first direction X and the second direction Y are both parallel to the first surface 1135. Generally, the first direction X can be understood as the length direction of the refrigerant heat exchange component 1130, and the second direction Y is correspondingly understood as the width direction of the second refrigerant heat exchange component 1130.

The first flow distribution channel 11323 communicates with the second flow distribution channels 11324, and the refrigerants enter each second flow distribution channel 11324 through the first flow distribution channel 11323 and then correspondingly enter the refrigerant heat exchange flow channel 11341 (specifically, an upstream flow channel 11333 in main heat exchange flow channels 11331) in the heat exchange zone 1133 through each second flow distribution channel 11324. The first flow distribution channel 11323 and the second flow distribution channels 11324 correspondingly form flow distribution zones on the first surface 1135 of the refrigerant heat exchange component 1130.

One or more first flow distribution channels 11323 can be provided, with the number as many as the first-flow-direction flow channels 11311, and one first-flow-direction flow channel 11311 communicates with one first flow distribution channel 11323. One first flow distribution channel 11323 communicates with a plurality of second flow distribution channels 11324, and the first flow distribution channels 11323 extend in the second direction Y, so that the plurality of second flow distribution channels 11324 can be arranged at intervals in the second direction Y to cover a wider width in the second direction Y, thereby increasing the coverage area of the flow distribution zone. In addition, the extension length direction of the first flow distribution channels 11323 just corresponds to the arrangement direction of each main heat exchange flow channel 11331, which facilitates each second flow distribution channel 11324 to connect the corresponding main heat exchange flow channel 11331, makes the refrigerants flow more smoothly in the first flow distribution channels 11323, and reduces flow path of the refrigerants entering the second flow distribution channels 11324 and the main heat exchange flow channels 11331, thereby reducing heat exchange losses.

In addition, each second flow distribution channel 11324 extend in the first direction X and has the flow direction consistent with the flow direction of the upstream flow channels 11333 in the main heat exchange flow channels 11331, so that the refrigerants can flow into each upstream flow channel 11333 more smoothly from each second flow distribution channel 11324, the flow path of the refrigerants entering the upstream flow channels 11333 can be shortened, thereby reducing the heat losses.

The refrigerants enter the refrigerant heat exchange component 1130, which can reduce the temperature difference of the refrigerant heat exchange component 1130 caused by uneven flow distribution; the flow distribution of the refrigerants is easily affected by the dryness of the refrigerants, the greater the dryness, the more difficult the flow distribution; and the minimum dryness is reached when the refrigerants enter the refrigerant heat exchange component 1130, such that the influence on the refrigerants is the smallest when the flow distribution is performed in this zone; this zone is generally divided into a plurality of second flow distribution channels 11324, thus the plurality of upstream flow channels 11333 can be reduced, and then the influence of the heat exchange capacity difference of a certain main heat exchange flow channel 11331 on the uniform temperature of a cold plate can be reduced.

In the embodiments, the first flow distribution channels 11323 extending in the second direction Y, and the plurality of second flow distribution channels 11324 can be arranged at intervals in the second direction Y and further in communication with the first flow distribution channels 11323, therefore, the distribution area of the flow distribution zone is increased, the smoothness of the flow of the refrigerants is improved, and a larger flow area is formed in the heat exchange zone 1133.

In some embodiments, as shown in FIG. 5 to FIG. 8, at least one first-flow-direction flow channel 11311 and at least two second-flow-direction flow channels 11312 are arranged, and all the first-flow-direction flow channels 11311 are distributed between all the second-flow-direction flow channels 11312.

It is described by taking the plurality of first-flow-direction flow channels 11311 as an example, all the first-flow-direction flow channels 11311 are distributed between all the second-flow-direction flow channels 11312, that is, all the first-flow-direction flow channels 11311 are adjacently arranged and distributed between two adjacent second-flow-direction flow channels 11312 in the plurality of second-flow-direction flow channels 11312, so that the purpose of centralized distribution of all the first-flow-direction flow channels 11311 is achieved. For example, during cooling the battery cell assembly 1110, the first-flow-direction flow channels 11311 are configured to guide in the refrigerants, and all the first-flow-direction flow channels 11311 are distributed in a centralized way to realize centralized introduction of the refrigerants; the first-flow-direction flow channels 11311 are adjacent to each other and are arranged between the two second-flow-direction flow channels 11312, so that the refrigerants can be spread and conveyed from the middle to the outside in a centralized way and are conveyed to each first flow channel 11321; correspondingly, all the first flow channels 11321 are also adjacent to each other and are arranged in the middle zone in a centralized way, so that the effect of centralized flow distribution in the middle is achieved; all the first flow channels 11321 can be distributed in a zone between any two second flow channels 11322, namely, the plurality of second flow channels 11322 are distributed at the edge positions of both sides, and the second flow channels 11322 and the first flow channels 11321 do not intersect or stagger.

During heating the battery cell assembly 1110, the first-flow-direction flow channels 11311 can also be configured to guide out the refrigerants, and the second-flow-direction flow channels 11312 are configured to guide in the refrigerants. All the first-flow-direction flow channels 11311 are adjacent to each other and are arranged between the second-flow-direction flow channels 11312, correspondingly, the plurality of first flow channels 11321 are also arranged in the middle zone between the two second flow channels 11322 in a centralized way, namely, the plurality of second flow channels 11322 are distributed at the edge positions of both sides of the middle zone.

In addition, by means of the structural form that all the first-flow-direction flow channels 11311 are adjacently arranged and all distributed between two adjacent second-flow-direction flow channels 11312, the second flow channels 11322 and the first flow channels 11321 are not prone to being crossed and staggered, thus mutual avoidance between the first flow channels 11321 and the second flow channels 11322 is well realized, and the layout is more reasonable.

Moreover, a plurality of flow channels are necessarily arranged in the connector component 1140 to be respectively in communication with the first-flow-direction flow channels 11311 and the second-flow-direction flow channels 11312. It is described by taking the inlet and outlet zone 1131 including two first-flow-direction flow channels 11311 and two second-flow-direction flow channels 11312 as an example, the first-flow-direction flow channels 11311 are configured to guide in the refrigerants, the second-flow-direction flow channels 11312 are configured to guide out the refrigerants, the two first-flow-direction flow channels 11311 are adjacently arranged and located between the two second-flow-direction flow channels 11312, correspondingly, two first flow channels 11321 are provided, two second flow channels 11322 are provided, the two first flow channels 11321 are located between the two second flow channels 11322 and can be centralized in the middle for flow distribution, which makes the flow distribution more centralized; correspondingly, two inlet flow channels and two outlet flow channels can be correspondingly formed in the connector component 1140, the two inlet flow channels can be respectively and correspondingly connected to the two first-flow-direction flow channels 11311, the two outlet flow channels can be respectively and correspondingly connected to the two second-flow-direction flow channels 11312, and the inlet flow channels and the outlet flow channels are symmetrically arranged, so that the acting force of the refrigerants on the connector component 1140 is more balanced. In addition, in the connector component 1140, the two adjacent inlet flow channels can be combined to form a general inlet flow channel, thus simplifying the flow channel structure in the connector component 1140.

In the embodiments, all the first-flow-direction flow channels 11311 are uniformly distributed between all the second-flow-direction flow channels 11312, thus under the cold-zone operating of the battery apparatus 1100, it is convenient to introduce the refrigerants from the middle part through the first-flow-direction flow channels 11311 and the first-flow-direction flow channels are in communication and matched with the first flow channels 11321 in the middle, the overheated parts on the refrigerant heat exchange component 1130 are conveniently distributed at the edge positions, which is conducive to achieving balanced heat exchange; in addition, under the heating condition of the battery apparatus 1100, the second-flow-direction flow channels 11312 are in communication with the second flow channels 11322 at the outside, thus the refrigerants can be distributed to the edge position of the refrigerant heat exchange component 1130, the battery cells 1112 with relatively low temperature at the edge positions can be heated firstly, thereby improving the balanced heat exchange effect of the refrigerant heat exchange component 1130 on the battery cell assembly 1110.

In some embodiments, as shown in FIG. 5 and FIG. 6, the number of the second-flow-direction flow channels 11312 is an even number, and the plurality of second-flow-direction flow channels 11312 are symmetrically arranged on both sides of all the first-flow-direction flow channels 11311.

The plurality of second-flow-direction flow channels 11312 are provided, for example, the number of the second-flow-direction flow channels 11312 can be any integer greater than 1, such as 2, 3, 4, or 5. That is, the second-flow-direction flow channels 11312 on both sides of the first-flow-direction flow channels 11311 can be arranged asymmetrically; for example, one side may have one second-flow-direction flow channel 11312, while the other side may have two second-flow-direction flow channels 11312.

However, because the structure of the battery cell assembly 1110 generally has the central zone and the zones symmetrically distributed on both sides of the central zone, it is generally needed to symmetrically arrange the refrigerant heat exchange flow channels 11341 corresponding to the structure of the battery cell assembly 1110; therefore, in order to facilitate symmetrical distribution, the number of the second-flow-direction flow channels 11312 is controlled to be even, making it easier to symmetrically arrange the plurality of second-flow-direction flow channels 11312 on both sides of the first-flow-direction flow channels 11311.

In the embodiments, the number of the second-flow-direction flow channels 11312 is an even number, thereby facilitating the symmetrical arrangement of the second-flow-direction flow channels 11312 on both sides of the first-flow-direction flow channels 11311, and making it convenient to distribute the flow in a centralized and symmetrical manner.

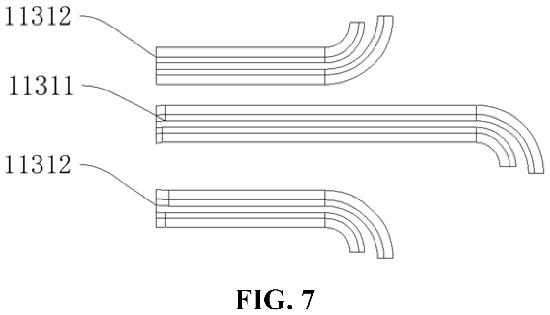

In some embodiments, as shown in FIG. 6 and FIG. 7, the first-flow-direction flow channels 11311 and the second-flow-direction flow channels 11312 extend in the first direction X.

Specifically, the first-flow-direction flow channels 11311 and the second-flow-direction flow channels 11312 extend in the first direction X, each first-flow-direction flow channel 11311 and each second-flow-direction flow channel 11312 form a linear straight flow channel structure, and it is to be understood that each first-flow-direction flow channel 11311 and each second-flow-direction flow channel 11312 are arranged in parallel and at interval. That is, the plurality of first-flow-direction flow channels 11311 and the plurality of second-flow-direction flow channels 11312 are arranged at intervals in a direction perpendicular to the first direction X, and the direction perpendicular to the first direction X can be defined as the second direction Y. The flow channels which extend linearly and are arranged at intervals realizes reasonable use of the space, and the arrangement of the flow channels is more regular.

In the example, the first-flow-direction flow channels 11311 are connected to the first flow channels 11321, the second-flow-direction flow channels 11312 are connected to the second flow channel 11322, and due to the inlet and outlet zone 1131, the main flow distribution and collection area 1132, and the heat exchange zone 1133, it is to be understood that the inlet and outlet zone 1131, the main flow distribution and collection area 1132, and the heat exchange zone 1133 are arranged in sequence in the first direction X.

In terms of each first-flow-direction flow channel 11311 and each second-flow-direction flow channel 11312, at least one first-flow-direction flow channel 11311 and one second-flow-direction flow channel 11312 are necessarily arranged adjacently and can perform heat exchange on each other, thereby improving the balance of temperature distribution between the two adjacent flow channels.

In the embodiments, the first-flow-direction flow channels 11311 and the second-flow-direction flow channels 11312 are arranged in parallel and at intervals, thus improving the arrangement regularity of the flow channels, and saving the space.

In some embodiments, as shown in FIG. 5, FIG. 8, and FIG. 12, the heat exchange zone 1133 includes two guide flow channels 11332 and a plurality of main heat exchange flow channels 11331; the plurality of main heat exchange flow channels 11331 are arranged and connected in parallel in the second direction Y, and each main heat exchange flow channel 11331 is distributed between the two guide flow channels 11332 in the second direction Y; in the first direction X, each main heat exchange flow channel 11331 is provided with a first end and a second ends which are arranged away from each other, and each second flow channel 11324 is correspondingly connected to the first end of each main heat exchange flow channel 11331; and one end of each guide flow channel 11332 is correspondingly connected to the second end of part of the main heat exchange flow channels 11331, and the other end of each guide flow channel 11332 is correspondingly connected to part of the second flow channels 11322.

Specifically, the plurality of main heat exchange flow channels 11331 are provided and are arranged at intervals in the second direction Y and in communication to form a parallel flow channel structure. One main heat exchange flow channel 11331 can be understood as a circulation loop, thus a plurality of circulation loops can be formed in the second direction Y, and each circulation loop can correspondingly exchange heat with part of the battery cell assembly 1110, thereby making the heat exchange of the refrigerant heat exchange component 1130 for the battery cells 1112 more sufficient and uniform.

A plurality of branch flow channels are arranged in a form that the plurality of main heat exchange flow channels 11331 are arranged in parallel, accordingly a plurality of independent circulation loops can be formed, the control to the plurality of circulation loops is convenient, and heat exchange can be performed on the battery cell assembly 1110 in a targeted manner, thereby improving the balance of heat exchange.

The first end and the second end can be understood as two end openings of each main heat exchange flow channel 11331, one is an inlet, and the other is an outlet. The first ends can be arranged close to second flow distribution channels 11324, and the second flow distribution channels 11324 can be as many as the main heat exchange flow channels 11331, so that each second flow distribution channel 11324 can be connected to the first end of each main heat exchange flow channel 11331 one by one. In the first direction X, the second ends of the main heat exchange flow channels 11331 are located at positions close to the edges of heat exchange zone 1133, and the guide flow channels 11332 can be connected to the second ends of the main heat exchange flow channels 11331, thus the guide flow channels 11332 can be always located at the edge position of the refrigerant heat exchange component 1130 to play a role in guiding the refrigerants at the edge positions.

In the second direction Y, each main heat exchange flow channel 11331 is distributed between two guide flow channels 11332, that is, the two guide flow channels 11332 are arranged at the edge positions of the whole heat exchange zones 1133. The guide flow channels 11332 can be understood as flow channels for guiding the refrigerants to flow in a centralized manner between each main heat exchange flow channel 11331 and each second flow channel 11322. For example, during cooling, the guide flow channels 11332 are configured to guide the refrigerants flowing back from each main heat exchange flow channel 11331 to the second flow channels 11322 from the edge positions of both sides of the refrigerant heat exchange component 1130, and the guide flow channels 11332 are located at the edge positions to correspond to the battery cells 1112 at the edge positions, thus reducing the influence of overheating on the battery cells 1112. In addition, during heating, the guide flow channels 11332 are configured to guide the refrigerants in the second flow channels 11322 to each main heat exchange flow channel 11331 from the edges of both sides of the refrigerant heat exchange component 1130, so that the battery cells 1112 which are located at the edges and have a lower relative temperature can be heated firstly, and the heat exchange balance can be improved.

In the embodiments, the plurality of main heat exchange flow channels 11331 are arranged between two guide flow channels 11332, so that a main zone for heat exchange of the battery cell assembly 1110 is formed in a zone between the two guide flow channels 11332, which is conducive to improving the heat exchange concentration; and the guide flow channels 11332 are located at the edge positions and play a role in centralized confluence and flow distribution, thus the overheating problem in the cooling process can be reduced, and the problem of heat exchange imbalance during the heating and cooling process can be reduced.

In some embodiments, as shown in FIG. 5, FIG. 8, and FIG. 10, an intersection zone 11337 is formed at a position where the main flow distribution and collection zone 1132 intersects with the heat exchange zone 1133, and the intersection zone 11337 extends in the second direction Y; a first node portion 11338 is formed at a position where each second flow distribution channel 11324 is connected to the corresponding main heat exchange flow channel 11331, and a second node portion 11339 is formed at a position where the guide flow channel 11332 is connected to the corresponding second flow channel 11322; and the first node portions 11338 and the second node portions 11339 are all distributed in the intersection zone 11337.

Specifically, the main flow distribution and collection area 1132 and the heat exchange zone 1133 are arranged adjacently, such that the intersection zone 11337 is formed at the position where the main flow distribution and collection zone 1132 intersects with the heat exchange zone 1133; the main flow distribution and collection area 1132 and the heat exchange zone 1133 are arranged in the first direction X, and the intersection zone 11337 will form a zone extending in the second direction Y on the first surface 1135, or, it is directly to be understood that the intersection zone 11337 extends in the second direction Y, the second direction Y can be understood as the length direction of the intersection zone 11337, and the intersection zone 11337 have a certain width in the first direction X.

One second flow distribution channel 11324 is connected to one main heat exchange flow channel 11331, so that the first node portion 11338 is formed at the position where each second flow distribution channel 11324 is connected to each main heat exchange flow channel 11331; the first node portion 11338 can be understood as a position where a plurality of flow channels are crossed and connected. All the first node portions 11338 are arranged in the intersection zone 11337, thus the first node portions 11338 do not appear in the coverage area of each main heat exchange flow channel 11331, namely, the first node portions 11338 are not formed in the corresponding heat exchange surface 1134 zone; therefore, the number of the first node portions 11338 and the arrangement positions of the first node portions 11338 can be well controlled; the first node portions 11338 are uniformly distributed on one side of the heat exchange zone 1133, and do not extend into the heat exchange zone 1133 or the middle zone; the first node portions 11338 are not formed in the middle flow zone of each main heat exchange flow channel 11331, so that the problems of flow resistance and pressure drop caused by flow distribution and confluence are avoided; and therefore, the temperature uniformity and heat exchange capability of the heat exchange zone 1133 are improved.

In the embodiments, the first node portions 11338 connected between the second flow distribution channels 11324 and each main heat exchange flow channel 11331 are all arranged in the intersection zone 11337 to avoid the heat exchange zone 1133, such that the resistance and pressure loss of the refrigerants in the refrigerant heat exchange flow channel 11341 of the heat exchange zone 1133 can be reduced, and the refrigerants can flow more smoothly, thereby improving the uniformity of temperature distribution on the refrigerant heat exchange component 1130, improving the heat exchange efficiency, and achieving the purpose of carrying out balanced and rapid heat exchange on the battery cell assembly 1110.

In some embodiments, as shown in FIG. 5, FIG. 8 and FIG. 11, each main heat exchange flow channel 11331 includes the upstream flow channel 11333 and the downstream flow channel 11334 which extend in the first direction X and are arranged at an interval in the second direction Y, and the upstream flow channel 11333 and the downstream flow channel 11334 communicate with each other at the end away from the inlet and outlet zone 1131; and the guide flow channels 11332 are connected to the downstream flow channels 11334, and the second flow distribution channels 11324 are connected to the upstream flow channels 11333.

Specifically, each main heat exchange flow channel 11331 includes the upstream flow channel 11333 and the downstream flow channel 11334 which communicate with each other; the second flow distribution channels 11324 communicate with the upstream flow channels 11333, the first node portions 11338 are formed at the position where the second flow distribution channels 11324 and the upstream flow channels 11333 are connected; the guide flow channels 11332 are connected to the downstream flow channels 11334, and third node portions 11340 are formed at the connecting position; the third node portions 11340 are connected to the end of the main heat exchange flow channel 11331 away from the second flow distribution channels 11324, and are located at the edge positions of the main heat exchange flow channels 11331. During cooling, the refrigerants sequentially flow into the upstream flow channels 11333, the downstream flow channels 11334, the guide flow channels 11332, the second flow channels 11322, and the second-flow-direction flow channels 11312 from the first-flow-direction flow channel 11311, the first flow distribution channels 11323, and the second flow distribution channel 11324 through the first node portions 11338, and therefore the effect that the refrigerants enter from the interior and exit from the exterior can be achieved in the inlet and outlet zone 1131. During heating, the refrigerants sequentially flow into the second flow distribution channels, the first flow distribution channels, and the first-flow-direction flow channels 11311 from the second-flow-direction flow channels 11312, the guide flow channels 11332, the downstream flow channels 11334, and the upstream flow channels 11333 through the first node portions 11338, and therefore the effect that the refrigerants enter from the exterior and exit from the interior can be achieved in the inlet and outlet zone 1131.

In the second direction Y, the upstream flow channels 11333 and the downstream flow channels 11334 are oppositely arranged, and the connecting position of the upstream flow channels 11333 and the downstream flow channels 11334 can be in a bent shape. The upstream flow channels 11333 and the downstream flow channels 11334 extend by a certain length in the first direction X. The refrigerants can flow between the upstream flow channels 11333 and the downstream flow channels 11334 in a reciprocating mode.

In the embodiments, the upstream flow channel 11333 and the downstream flow channel 11334 in each main heat exchange flow channel 11331 are arranged at an interval in the second direction Y, so that a certain flow channel coverage area is formed in the second direction Y, the refrigerants in each main heat exchange flow channel 11331 can flow independently, thereby making the refrigerants flow more smoothly.

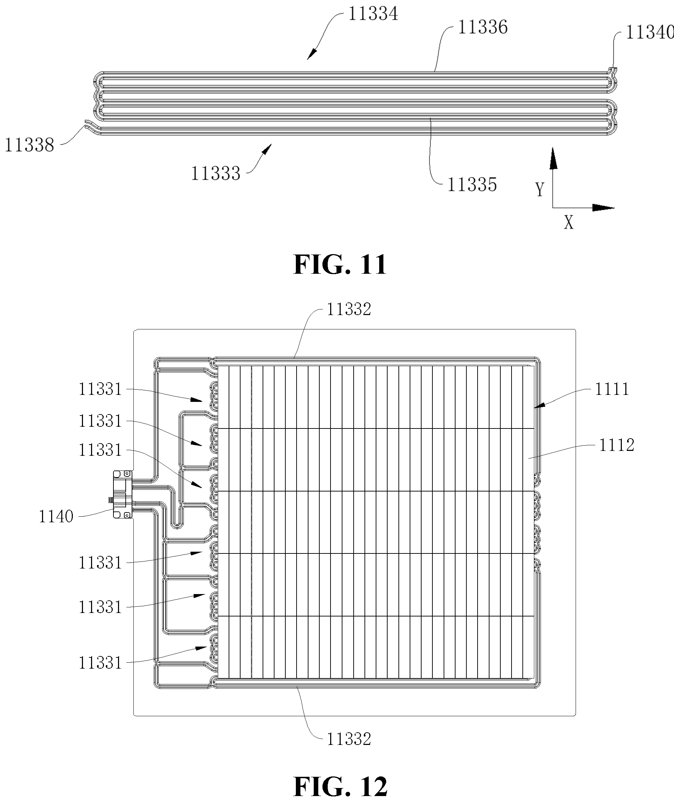

In some embodiments, as shown in FIG. 11, the upstream flow channels 11333 each include a plurality of upstream flow sub-channels 11335 which extend in the first direction X and are arranged at intervals in the second direction Y, and all the upstream flow sub-channels 11335 are in communication with each other; and/or, the downstream flow channels 11334 each include a plurality of downstream flow sub-channels 11336 which extend in the first direction X and are arranged at intervals in the second direction Y, and all the downstream flow sub-channels 11336 are in communication with each other.

Specifically, in terms of the upstream flow channels 11333, the upstream flow channels 11333 each include a plurality of upstream flow sub-channels 11335 which can extend in the first direction X and are oppositely arranged at intervals in the second direction Y, and the upstream flow channels 11333 are in a structural form that a plurality of straight flow channel structures are formed and communicate with one another in parallel. A larger number of upstream flow sub-channels 11335 can be arranged in the same zone, and in the same zone, the width of each upstream flow sub-channel 11335 decreases and the density increases, the flow speeds of the refrigerants in each upstream flow sub-channel 11335 increases, and therefore the heat exchange area can be increased, and the heat exchange efficiency can be improved.

The plurality of upstream flow sub-channels 11335 are connected to the same first node portion 11338, the second flow distribution flow channels can communicate with the plurality of upstream flow sub-channels 11335 through the first node portion 11338, and the refrigerants can simultaneously flow in the plurality of upstream flow sub-channels 11335, thereby improving the flow efficiency, improving the refrigerant flowing smoothness, and reducing the pressure drop loss.

Optionally, in terms of the downstream flow channels 11334, the downstream flow channels 11334 each include a plurality of downstream flow sub-channels 11336 which can extend in the first direction X and are oppositely arranged at intervals in the second direction Y, and the downstream flow channels 11334 are in a structural form that a plurality of straight flow channel structures are formed and communicate with one another in parallel. A larger number of downstream flow sub-channels 11336 can be arranged in the same zone, and in the same zone, the width of each downstream flow sub-channel 11336 decreases and the density increases, the flow speeds of the refrigerants in each downstream flow sub-channel 11336 increases, and therefore the heat exchange area can be increased, and the heat exchange efficiency can be improved.

The plurality of downstream flow sub-channels 11336 can be connected to one end of the guide flow channel 11332, and the refrigerants can simultaneously flow in the plurality of downstream flow sub-channels 11336, thereby improving the flow efficiency, improving the refrigerant flowing smoothness, and reducing the pressure drop loss.

In the embodiments, each the upstream flow channel 11333 is connected in a mode that the plurality of upstream flow sub-channels 11335 are connected in parallel, each downstream flow channel 11334 is connected in a mode that the plurality of downstream flow sub-channels 11336 are connected in parallel, and therefore the flowing efficiency can be improved, and the heat exchange efficiency can be improved.

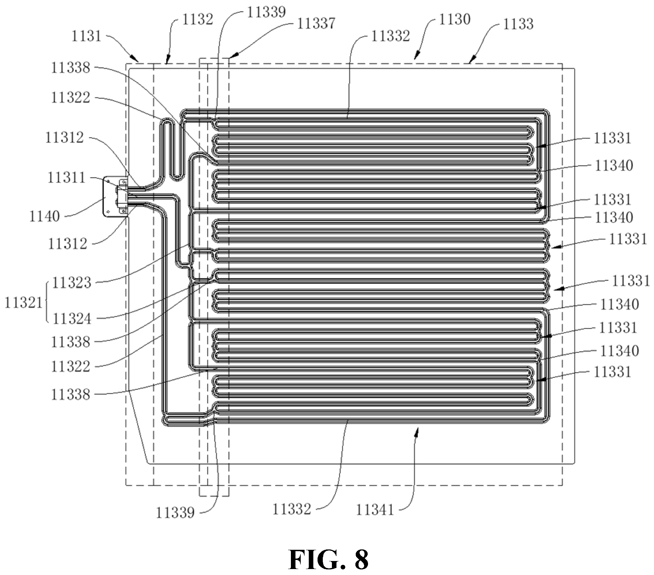

In some embodiments, as shown in FIG. 5 and FIG. 8, the upstream flow channels 11333 in part of the main heat exchange flow channels 11331 are adjacent to and in heat conduction fit with the downstream flow channels 11334 in the adjacent main heat exchange flow channels 11331, and the downstream flow channels 11334 in part of the main heat exchange flow channels 11331 are adjacent to and in heat conduction fit with the upstream flow channels 11333 in the adjacent main heat exchange flow channels 11331.

As shown in FIG. 11, the upstream flow channel 11333 and the downstream flow channel 11334 in each main heat exchange flow channel 11331 are in communication to form one heat exchange loop, that is, each main heat exchange flow channel 11331 has a heat exchange inlet and a heat exchange outlet. It is to be noted that the upstream flow channels 11333 and the downstream flow channel 11334 can be understood as a straight flow channel structure, and the portion in which the upstream flow channels 11333 and the downstream flow channels 11334 are connected can be understood as a bent flow channel structure.

It is assumed that the downstream flow channels 11334 in the plurality of main heat exchange flow channels 11331 are arranged in a centralized way, the refrigerant heat exchange component 1130 will form large-area overheating zones on the zone of the heat exchange surface 1134 corresponding to the downstream flow channels 11334 and the zones corresponding to the guide flow channels 11332; the overheating zones refer to zones with weaker heat exchange capacity; and if the area of the overheating zones is too large, it will affect the overall heat exchange effect on the battery unit assembly 1110, causing the temperature of the battery unit assembly 1110 to rise, thereby affecting the performance and service life of the battery unit assembly 1110 and the battery apparatus 1100.

According to the analysis on the above overheating problem, since the heat exchange capacity of the refrigerants in the upstream flow channels 11333 is strong, the temperature of the zone on the heat exchange surface 1134 corresponding to the upstream flow channels 11333 is low, the heat exchange capacity of the refrigerants in the downstream flow channels 11334 is relatively weak, and the temperature of the zone on the heat exchange surface 1134 corresponding to the downstream flow channels 11334 is high, in order to reduce the area of the overheating zone, the plurality of main heat exchange flow channels 11331 in the refrigerant heat exchange flow channel 11341 are arranged side by side, and the upstream flow channels 11333 in part of the main heat exchange flow channels 11331 are adjacent to and in heat conduction fit with the downstream flow channels 11334 in the adjacent main heat exchange flow channels 11331, and the downstream flow channels 11334 in part of the main heat exchange flow channels 11331 are adjacent to and in heat conduction fit with the upstream flow channels 11333 in the adjacent main heat exchange flow channel 11331, that is, the upstream flow channels 11333 and the downstream flow channel 11334 in the two adjacent main heat exchange flow channels 11331 are arranged adjacent to each other; the heat conduction fit means that heat conduction (or heat exchange) can be performed between the upstream flow channels 11333 and the downstream flow channel 11334 adjacent to each other, and it can be understood as that due to the adjacent arrangement of the upstream flow channels 11333 and the downstream flow channels 11334, heat conduction (or heat exchange) can be performed between the zone on the heat exchange surface 1134 corresponding to the upstream flow channels 11333 and the zone on the heat exchange surface 1134 corresponding to the downstream flow channels 11334.

Due to the heat conduction fit between the upstream flow channels 11333 and the downstream flow channels 11334, the low temperature of the upstream flow channels 11333 enables the high temperature of the downstream flow channels 11334 to be balanced, that is, a low-temperature zone on the heat exchange surface 1134 corresponding to the upstream flow channels 11333 enables the high temperature of a high-temperature zone on the heat exchange surface 1134 corresponding to the downstream flow channels 11334 to be balanced, and thus the temperature difference of the heat exchange surface 1134 on the refrigerant heat exchange component 1130 can be reduced; the temperature of the zones on the heat exchange surface 1134 corresponding to the downstream flow channels 11334 adjacent to the upstream flow channels 11333 is not liable to rise excessively; and if the temperature is relatively reduced, an overheated zone is not liable to form, and thus the temperature distribution on the heat exchange surface 1134 is more balanced. Therefore, the upstream flow channels 11333 and the downstream flow channel 11334 in two adjacent main heat exchange flow channels 11331 correspondingly form uniform-temperature zone on the heat exchange surface 1134.

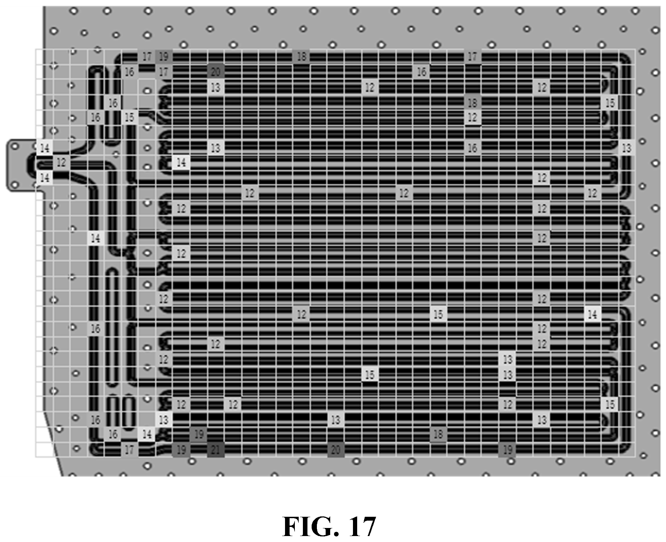

In combination with the schematic of the temperature distribution of the refrigerant heat exchange flow channel 11341 as shown in FIG. 17, it is clearly observed that the temperature of the downstream flow channels 11334 adjacent to the upstream flow channels 11333 is clearly balanced; and in FIG. 17, the larger the number, the higher the temperature; and the size of the number reflects the temperature level.

In the embodiments, the upstream flow channels 11333 and the downstream flow channels 11334 in the two main heat exchange flow channels 11331 are adjacently arranged, high temperature of the downstream flow channels 11334 can be balanced through the low temperature of the upstream flow channels 11333, and the temperature of the zone on the heat exchange surface 1134 corresponding to the downstream flow channels 11334 decreases, and therefore the overheated zone is not prone to being formed, the area of the overheated zone is relatively reduced, the heat exchange effect on the battery cell assembly 1110 can be improved, the temperature distribution on the heat exchange surface 1134 of the refrigerant heat exchange component 1130 is more uniform, and the heat exchange uniformity on the battery cell assembly 1110 is improved.

In some embodiments, as shown in FIG. 12, the battery cell assembly 1110 includes a plurality of battery cell groups 1111, each battery cell group 1111 includes a plurality of battery cells 1112 stacked in the first direction X, and the plurality of battery cell groups 1111 are arranged side by side in the second direction Y; the refrigerant heat exchange component 1130 is provided with a first surface 1135 which is opposite to the battery cell assembly 1110; and a projection zone of each battery cell group 1111 on the first surface 1135 covers at least one main heat exchange flow channel 11331.

In terms of the battery cell assembly 1110, the battery cell assembly 1110 includes the plurality of battery cell groups 1111, the plurality of battery cell groups 1111 are arranged side by side in the second direction Y, each battery cell group 1111 includes a plurality of battery cells 1112, and the battery cells 1112 can be cubic or cylindrical; and the battery cells 1112 in each battery cell group 1111 are sequentially stacked and arranged in the first direction X, and the second direction Y is a direction perpendicular to the first direction X.

The plurality of main heat exchange flow channels 11331 are arranged at intervals in the second direction Y and are in communication to form a parallel flow channel structure, such that the plurality of main heat exchange flow channels 11331 and the plurality of battery cell groups 1111 are sequentially and correspondingly arranged in the second direction Y, and the plurality of battery cells 1112 in each battery cell group 1111 are sequentially arranged in the extension direction of the main heat exchange flow channels 11331.

The battery cell assembly 1110 and the first surface 1135 (specifically the heat exchange surface 1134) are oppositely arranged, such that each battery cell group 1111 forms a projection zone on the corresponding heat exchange surface 1134, and the projection area of each battery cell group 1111 on the first surface 1135 covers at least one main heat exchange flow channel 11331.

It is possible that the projection area of each battery cell group 1111 on the first surface 1135 covers one main heat exchange flow channel 11331, namely, one main heat exchange flow channel 11331 performs targeted heat exchange on one battery cell group 1111, each battery cell group 1111 performs heat exchange through one main heat exchange flow channel 11331, and as long as the structures of the main heat exchange flow channels 11331 are the same and the data such as the flow velocity and pressure of the refrigerants in the main heat exchange flow channels 11331 are the same, the heat exchange capacities of the main heat exchange flow channels 11331 will be the same, so that balanced heat exchange of each battery cell group 1111 can be realized.

It is also possible that the projection area of each battery cell group 1111 on the first surface 1135 covers one main heat exchange flow channel 11331 and also covers a part of the adjacent main heat exchange flow channel 11331, or, the projection area of each battery cell group 1111 on the first surface 1135 can cover the plurality of main heat exchange flow channels 11331, so that the heat exchange capacity of the main heat exchange flow channels 11331 to each battery cell group 1111 is enhanced. In order to improve the effect of balanced heat exchange, the number of the main heat exchange flow channels 11331 corresponding to each battery cell group 1111 can be the same, and the number can be a fraction or a decimal. For example, the projection area of each battery cell group 1111 on the first surface 1135 covers one main heat exchange flow channel 11331 and half of one adjacent main heat exchange flow channel 11331.

In the embodiments, the battery cell assembly 1110 is arranged to be formed by the plurality of battery cell groups 1111, and the extension direction of the main heat exchange flow channel 11331 is consistent with an arrangement direction of the plurality of battery cells 1112 in each battery cell group 1111, such that the plurality of battery cells 1112 in each battery cell group 1111 have a larger heat exchange area with the main heat exchange flow channel 11331, and each main heat exchange flow channel 11331 can exchange heat for each battery cell group 1111 in a more targeted manner, thereby improving the effect of balanced heat exchange.

In some embodiments, the box body assembly 1120 is further provided with a mounting cavity, and the connector component 1140 is at least partially accommodated in the mounting cavity.

Specifically, the box body assembly 1120 includes a box frame 1123, and the box frame 1123 can be understood as an annular frame structure enclosed by side walls of the box body assembly 1120. The refrigerant heat exchange component 1130 can be a part of the box body assembly 1120, for example, the refrigerant heat exchange component 1130 can be used as a bottom plate of the box body assembly 1120. Or, the box body assembly 1120 further includes the bottom plate that is connected to an open port of the box frame 1123, and the refrigerant heat exchange component 1130 can be located inside the box body assembly 1120 and is arranged opposite to the bottom plate.

The mounting cavity can be of a groove structure or cavity structure formed in the box frame 1123 of the box body assembly 1120, and specifically, the mounting cavity is formed in the side wall of the box frame 1123 and can play a role in accommodating the connector component 1140, so that the exposed volume of the connector component 1140 outside the box body can be reduced. The mounting cavity plays a role in containing the connector component 1140.

In the embodiments, the mounting cavity is arranged and can accommodate at least part of the connector component 1140, thereby increasing the space utilization rate and reducing the risk of interference between the connector component 1140 and other external components.

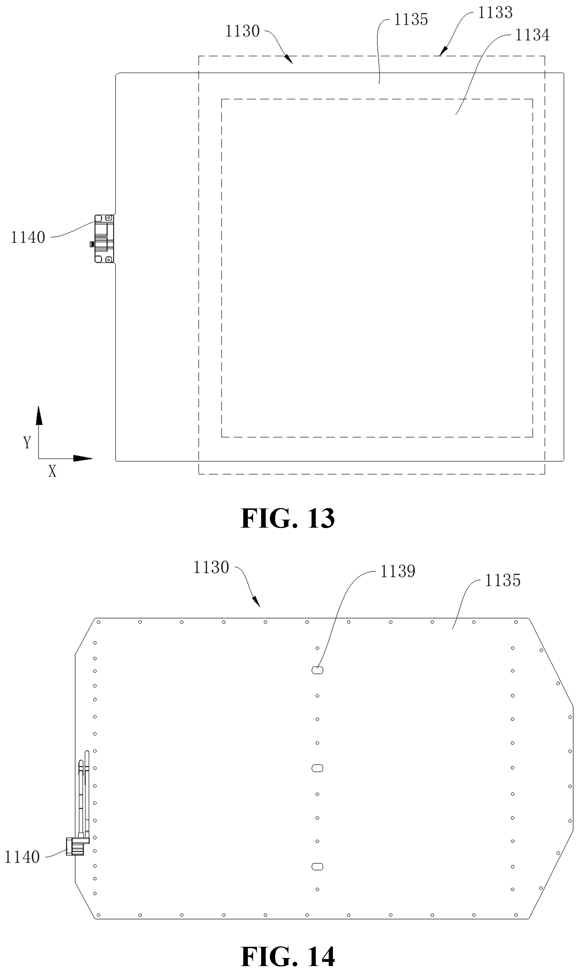

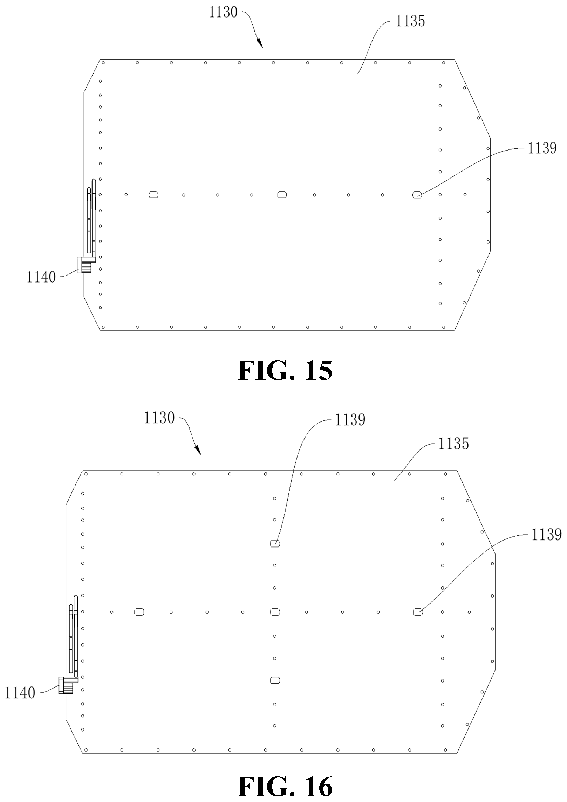

In some embodiments, as shown in FIG. 14 to FIG. 16, the refrigerant heat exchange component 1130 is provided with the first surface 1135 and the second surface which are opposite to each other, and the first surface 1135 is arranged opposite to the battery cell assembly 1110; and the refrigerant heat exchange component 1130 includes a plurality of mounting holes 1139, and the plurality of mounting holes 1139 are arranged between the first surface 1135 and the second surface in a penetrating manner and avoid the first-flow-direction flow channels 11311, the second-flow-direction flow channels 11312, the first flow channels 11321, the second flow channels 11322, and the refrigerant heat exchange flow channels 11341.

Specially, the first surface 1135 and the second surface are two opposite surfaces of the refrigerant heat exchange component 1130, the battery cell assembly 1110 can be opposite to the first surface 1135, and the heat exchange surface 1134 is a part of zone on the first surface 1135.

The mounting holes 1139 facilitate stable connection between the refrigerant heat exchange component 1130 and other structures in the battery apparatus 1100, for example, by means of connecting members such as bolts and rivets in the mounting holes 1139 in a penetrating mode, the refrigerant heat exchange component 1130 can be mounted at a specific position of the box body assembly 1120 or the vehicle 1000, the fixing effect on the refrigerant heat exchange component 1130 is achieved, and vibration, displacement and the like of the refrigerant heat exchange component 1130 during the operation process of the battery apparatus 1100 can be reduced.

The mounting holes 1139 can be of a through hole structure and form a communication hole that penetrates the first surface 1135 and the second surface. The mounting holes 1139 can be disposed in the heat exchange zone 1133, for example, in a central zone of the heat exchange zone 1133 in the first direction X; the mounting holes 1139 can be arranged between two heat exchange sub-channels and do not communicate with the main heat exchange flow channel 11331, for example, the main heat exchange flow channel 11331 may be the upstream flow channel 11333 or the downstream flow channel 11334, and the mounting holes 1139 can be arranged between two upstream sub-channels 11335 (or the straight channel structure) in the upstream flow channel 11333, or, between two downstream sub-channels 11336 in the downstream flow channel 11334, or, at a position between one upstream flow channel and one downstream flow channel 11334.

The diameter of the mounting holes 1139 can be greater than the distance between two adjacent flow channels, thus the mounting holes 1139 can be bent for avoidance at the positions opposite to the mounting holes 1139, that is, the flow channels can be bent at the positions opposite to the mounting holes 1139, for example, in a semicircular bent shape.

In embodiments, the mounting holes 1139 are formed so that the refrigerant heat exchange component 1130 can be fixedly connected to other components by locking members such as bolts, thereby facilitating connection between the refrigerant heat exchange component 1130 and other components.

In some embodiments, as shown in FIG. 14 to FIG. 16, in the first direction X, a plurality of mounting holes 1139 are formed in a middle zone of the refrigerant heat exchange component 1130 and are arranged at intervals in the second direction Y; and/or, in the second direction Y, the plurality of mounting holes 1139 are formed in the middle zone of the refrigerant heat exchange component 1130 and are arranged at intervals in the first direction X; and the second direction Y is perpendicular to the first direction X.

Specifically, both the first direction X and the second direction Y are directions parallel to the first surface 1135, and the second direction Y is perpendicular to the first direction X. In the first direction X, the mounting holes 1139 are formed in the middle zone of the refrigerant heat exchange component 1130, which makes the force borne by the refrigerant heat exchange component 1130 more balanced during mounting and fixing. If the refrigerant heat exchange component 1130 is connected and fixed to other components through the mounting holes 1139, because the mounting points are located in the middle, component deformation or damage caused by uneven stress can be effectively reduced, and the mechanical stability of the refrigerant heat exchange component 1130 can be improved.

Because the heat exchange flow sub-channels around the mounting holes 1139 are needed to form bent structures for avoidance, in order to improve the structural consistency between the plurality of main heat exchange flow channels 11331, the mounting holes 1139 can be formed between every two adjacent main heat exchange flow channels 11331, the bent structure is formed on each main heat exchange flow channel 11331, thus the structural form of each main heat exchange flow channel 11331 are consistent, which improves the flowing consistency of the refrigerants in each main heat exchange flow channel 11331, thereby improving the temperature uniformity of the heat exchange surface 1134.

In the second direction Y, the plurality of mounting holes 1139 can be formed in a straight line parallel to the second direction Y, thus improving the regularity of the structural layout.

Optionally, in the second direction Y, the refrigerant heat exchange component 1130 is provided with the middle zone; and in the second direction, the plurality of mounting holes 1139 are formed in the middle zone of the refrigerant heat exchange component 1130 and are arranged at intervals in the first direction X. In the first direction X, the plurality of mounting holes 1139 can be formed in a straight line parallel to the first direction X, thus improving the regularity of the structural layout.

Optionally, the mounting holes 1139 are formed in both the first direction X and the second direction Y, and the plurality of mounting holes 1139 are formed in the middle zone of the refrigerant heat exchange component 1130 in a crossed mode.

In the embodiment, the plurality of mounting holes 1139 are formed in the middle of the refrigerant heat exchange component 1130 and can be evenly distributed at intervals, so that the stress balance of the refrigerant heat exchange component 1130 can be improved, and the layout between the main heat exchange flow channel 11331 and the mounting holes 1139 can be more regular
In some embodiments, as shown in FIG. 5, a plurality of cavities 1138 are further formed in the refrigerant heat exchange component 1130, and each cavity 1138 is arranged to avoid the first-flow-direction flow channels 11311, the second-flow-direction flow channels 11312, the first flow channels 11321, the second flow channels 11322, and the refrigerant heat exchange flow channels 11341.

The cavities 1138 can be understood as hollow spaces in the refrigerant heat exchange component 1130, for example, during the manufacturing process of the refrigerant heat exchange component 1130, the refrigerant heat exchange component 1130 includes an upper plate body and a lower plate body which are welded and fixed to each other, and during welding, and a large amount of gas will be generated. If the gas cannot be discharged in time, defects such as pores are resulted in a weld joint, which reduces the welding quality and the sealing property of the weld joint. The cavities 1138 serve as structural cavities and can provide a discharge channel for the gas generated during welding, thus the gas can be smoothly discharged, welding defects caused by gas accumulation are reduced, the welding quality and reliability are guaranteed, the sealing property of the refrigerant heat exchange component 1130 is improved, and the risk of refrigerant leakage is reduced.

In addition, the plurality of cavities 1138 are additionally arranged in a space outside the main heat exchange flow channel 11331 and can improve the overall structural strength of the refrigerant heat exchange component 1130 can be improved. By means of the cavities 1138, the overall structure of the refrigerant heat exchange component 1130 is changed, and the refrigerant heat exchange component 1130 has better mechanical property. From the mechanical perspective, the cavities 1138 can be used as a reinforcing structure to effectively improve the bending strength and compressive strength of the refrigerant heat exchange component 1130. If the refrigerant heat exchange component 1130 is subjected to an external force, the cavities 1138 can disperse stress and reduce the stress concentration phenomenon, thus the refrigerant heat exchange component 1130 can bear a larger external force without deformation or damage, the stability and the reliability of the whole battery apparatus 1100 can be improved, and the service life of the battery apparatus 1100 can be prolonged.

The plurality of cavities 1138 are arranged at one end or two ends of the refrigerant heat exchange component 1130 in the first direction X.

In the embodiments, the plurality of cavities 1138 are formed, thus flow guide and exhaust effects can be achieved during the welding process, the welding quality and welding sealing performance can be improved, and moreover, the overall structural strength of the refrigerant heat exchange component 1130 can be improved.

In some embodiments, shown in FIG. 3, the box body assembly 1120 includes a box body 1121 with the accommodating cavity 1124; the refrigerant heat exchange component 1130 is connected to the box body 1121 and is accommodated in the accommodating cavity 1124; and the refrigerant heat exchange component 1130 and the battery cell assembly 1110 are oppositely arranged.

Specifically, a box body 1121 can include a cover body 1122, a box frame 1123, and a bottom plate; the cover body 1122 and the box frame 1123 are mutually covered; an open port is formed in the side of the box frame 1123 opposite to the cover body 1122, and it can be understood as that the box body 1122 and the box frame 1123 can be connected to form a groove structure with the open port; the bottom plate is opposite to the cover body 1122 and covers the open port; and the cover body 1122, the box frame 1123, and the bottom plate jointly define the accommodating cavity 1124 for accommodating the battery cell assembly 1110. The cover body 1122 and the bottom plate can be of plate-shaped structures, the box frame 1123 can be of a hollow structure with two ends opened, for example, the box frame 1123 is of an annular frame structure, the cover body 1122 covers one open side of the box frame 1123, the bottom plate is connected to the other open (namely the opening) side of the box frame 1123, and the cover body 1122 can be arranged opposite to the bottom plate. The box body 1121 can be in various shapes, such as a cylinder and a cuboid.

The refrigerant heat exchange component 1130 can be connected to the box body 1121 and accommodated in the accommodating cavity 1124 to be opposite to the bottom plate, and the battery cell assembly 1110 is opposite to the refrigerant heat exchange component 1130, so that the refrigerant heat exchange component 1130 can support the battery cell assembly 1110 while exchanging heat with the battery cell assembly 1110.

In the embodiments, the refrigerant heat exchange component 1130 can be accommodated in the accommodating cavity 1124 and arranged opposite to the battery cell assembly 1110, and thus the refrigerant heat exchange component 1130 can support the battery cell assembly 1110 while exchanging heat with the battery cell assembly 1110.

In some embodiments, as shown in FIG. 2, the box body assembly 1120 includes the box body 1121 with the opening, and the refrigerant heat exchange component 1130 is connected to the box body 1121 and covers the opening to form the accommodating cavity 1124; and the refrigerant heat exchange component 1130 is arranged opposite to the battery cell assembly 1110.

Specifically, the box body 1121 can include the cover body 1122 and the box frame 1123 which are mutually covered; the open port is formed in the side of the box frame 1123 opposite to the cover body 1122, and it can be understood as that the cover body 1122 and the box frame 1123 can be connected to form the groove structure with the open port; the cover body 1122, the box frame 1123, and the refrigerant heat exchange component 1130 jointly define the accommodating cavity 1124 for accommodating the battery cell assembly 1110. The cover body 1122 can be of the plate-shaped structure; the box frame 1123 can be of the hollow structure with two ends opened, for example, the box frame 1123 is of the annular frame structure; the cover body 1122 covers one open side of the box frame 1123, and the refrigerant heat exchange component 1130 is connected to the other open (namely the opening) side of the box frame 1123; and the cover body 1122 can be arranged opposite to the refrigerant heat exchange component 1130. The box body 1121 can be in various shapes, such as a cylinder and a cuboid.

The refrigerant heat exchange component 1130 can be connected to the box body 1121 and can form the bottom plate to be opposite to the battery cell assembly 1110, such that the refrigerant heat exchange component 1130 can support the battery cell assembly 1110 while exchanging heat with the battery cell assembly 1110, which is conducive to simplifying the structure of the external box body 1121 and reducing the weight of the battery apparatus 1100.

In the embodiments, the refrigerant heat exchange component 1130 can be connected to the box body 1121 and can form the bottom plate, so that the refrigerant heat exchange component 1130 can support the battery cell assembly 1110 while exchanging heat with the battery cell assembly 1110, which is conducive to simplifying the structure of the external box body 1121 and reducing the weight of the battery apparatus 1100.

In some embodiments, the main heat exchange flow channel 11331 is filled with a phase-change medium.

Specifically, the phase-change medium is a substance that can undergo a phase transition at a specific temperature and absorb or release a large amount of latent heat during the phase change process. In this example, the heat exchange medium is the phase-change medium; if the battery cell assembly 1110 generates a large amount of heat during charging and discharging, the phase-change medium in the main heat exchange flow channel 11331 absorbs the heat and undergoes a phase change, thus slowing down the rapid temperature rise of the battery apparatus 1100. If the temperature of the battery apparatus 1100 decreases, the phase-change medium releases heat, thus slowing down the negative impact of low temperature on battery performance. The phase-change medium used as the heat exchange medium helps maintain the battery apparatus 1100 at a relatively stable temperature, reducing the problems such as capacity degradation and shortened service life caused by excessively high temperatures, or increased internal resistance and reduced charge-discharge efficiency caused by excessively low temperatures, thereby improving the overall performance, reliability, and stability of the battery apparatus 1100.

It is to be noted that the phase-change medium and the refrigerants can work collaboratively. For example, in a large-scale battery energy storage system, the refrigerants will transfer the heat generated by a battery cell assembly 1110 from a battery module to a heat dissipation end of the overall thermal management system, while the phase-change medium is arranged inside the battery module; if the battery cell module 1110 generates a large amount of heat within a short period, the phase-change medium will rapidly absorb the heat and undergoes the phase change, thus mitigating the sharp rise in temperature and buying time for the refrigerants to dissipate heat further; and the two work in coordination to improve the efficiency and stability of the thermal management system.

In the embodiments, the main heat exchange flow channel 11331 is filled with the phase-change medium, which is beneficial for improving heat exchange efficiency and enhancing the performance stability of the battery apparatus 1100.

In some embodiments, the refrigerant heat exchange component 1130 is prepared from a combination of one or more metals and non-metals.

Specifically, metal materials have good thermal conductivity, such as copper and aluminum, which can quickly conduct heat, allowing the refrigerant heat exchange component 1130 to efficiently transfer the heat generated by the battery cell assembly 1110. Non-metal materials, like ceramics, have unique thermal performance advantages, for example, some ceramic materials have high-temperature resistance and can maintain stable thermal conductivity even in high-temperature environments. By combining metals and non-metals, respective thermal conduction advantages can be fully utilized to ensure that the refrigerant heat exchange component 1130 maintains efficient heat transfer under different operating temperature ranges and thermal load conditions, thereby improving the overall performance of the battery thermal management system.

In the embodiments, the materials for the refrigerant heat exchange component 1130 are more flexible and variable, and can be flexibly combined and prepared according to the heat exchange requirements of the battery apparatus 1100, so that the refrigerant heat exchange component 1130 can maintain high thermal conductivity and improve the overall performance of the battery thermal management system.

According to some embodiments of the present application, as shown in FIG. 4, the present application further provides a refrigerant heat exchange apparatus, which includes the refrigerant heat exchange component 1130 in the battery apparatus 1100 in any one of the above embodiments.

The example of the refrigerant heat exchange apparatus in the present application is on the basis of the example of the battery apparatus 1100 described above; the structure of the refrigerant heat exchange component 1130 in the example of the battery apparatus 1100 is the same as the structure of the refrigerant heat exchange component 1130 in this example, and the technical effects are the same and will not be listed here; and details reference to the above descriptions above regarding the battery apparatus 1100.

According to some embodiments of the present application, the present application further provides an energy storage apparatus, which includes a power converter apparatus and the energy storage apparatus in the above embodiments; and the power converter apparatus is configured to electrically connect a power generation apparatus with the energy storage apparatus.

Specifically, the energy storage apparatus can include one or more battery clusters so as to improve the voltage and capacity of the energy storage apparatus. The battery cluster can include a plurality of battery apparatuses 1100, and the plurality of battery apparatuses 1100 are connected in series through a busbar component so as to improve the voltage of the energy storage apparatus. If the energy storage apparatus includes a plurality of battery clusters, the plurality of battery clusters are connected in parallel so as to improve the capacity of the energy storage apparatus.

The energy storage can be used for an energy storage power station, a wind power generation system, a solar power generation system, a mobile power system or a temporary power supply system and the like. Energy storage apparatuses can store electric energy as needed and output it at the appropriate time. For example, the energy storage apparatus may store the electric energy when the electricity consumption is low, and provide electric energy for relevant users or electrical devices during peak electricity consumption. The energy storage system provided by the embodiment of the present application can be any electrical power system needing the energy storage apparatus.

In some embodiments, the energy storage apparatus is an energy storage container or an energy storage electric cabinet.

In some embodiments, the energy storage apparatus can include a cabinet body and one or more battery clusters, and the battery clusters are accommodated in the cabinet body.

In some embodiments, the energy storage apparatus may include a thermal management module, a main control module, a general control module, a power distribution module, a fire fighting module and other modules.

By way of example, the thermal management module may include a liquid cooling unit; and the liquid cooling unit provides cooling liquid that can condition the temperature of the battery cell 1112 for each battery apparatus 1100 through a pipeline.

As an example, a main control module can serve as a battery management unit of the battery clusters and is configured to monitor and manage the battery clusters. The main control module can monitor information such as current, voltage, power or temperature of the battery clusters. For example, the main control module can control charging and discharging current, voltage, and the like of the battery clusters. The main control module includes a Slave Battery Management Unit (SBMU), a fusion switch and other modules.

As an example, the general control module may be used as a battery management unit of the energy storage apparatus and is configured to monitor and manage the energy storage Apparatus. The general control module can monitor the current, voltage, power, state of charge or temperature or other information of the energy storage apparatus. For example, it can control the charge and discharge current, voltage and the like of the energy storage apparatus. As an example, the general control module includes an Insulation Monitoring Module (IMM), a Master Battery Management Unit (MBMU), an EtherNet (ETH), an optical fiber conversion module and other modules.

As an example, a fire fighting module includes a control panel, a detector, an alarm device and the like, and is used for detecting, alarming or extinguishing an energy storage system.

As an example, a power distribution module can be configured to distribute power to modules needing power in the energy storage apparatus.

According to some embodiments of the present application, the present application further provides an energy storage system, which includes a power converter apparatus and the energy storage apparatus in the above embodiments; and the power converter apparatus is configured to electrically connect the power generation apparatus with the energy storage apparatus.

In some embodiments, the energy storage system can include one or more energy storage apparatuses and a power converter system (PCS), with the power converter system connected between the power generation apparatuses and the energy storage apparatuses. The power generation apparatuses are configured to generate electrical energy, and the electrical energy generated by the power generation apparatuses can be stored in the energy storage apparatuses through the power converter system. As an example, the power generation apparatuses may specifically be solar panels, hydroelectric power devices, thermal power devices, wind power devices, and so on. The specific type of the power generation apparatus is not limited in the present application.

According to some embodiments of the present application, as shown in FIG. 1, the present application also provides an electrical apparatus, which includes the battery apparatus 1100 in the above embodiment, the energy storage apparatus in the above embodiment or an energy storage system in the above embodiment; and the battery apparatus 1100 is configured to store or provide electric energy.

The technical solutions described in the embodiments of the present application are applicable to various electrical apparatuses that use the battery cells 1112, such as mobile phones, portable devices, laptops, electric vehicles, electric toys, power tools, vehicles 1000, ships, and spacecraft, for example, spacecraft including airplanes, rockets, space shuttles, and spaceships.

The example of the electrical apparatus in the present application is on the basis of the above example of the battery apparatus 1100, and the example of the electrical apparatus includes all the technical effects of the example of the battery apparatus 1100 and will not be listed here.

According to some embodiments of the present application, the present application also provides a charging network, which includes a charging pile and the energy storage apparatus in the above embodiment or the energy storage system in the above embodiment; and the energy storage apparatus is configured to provide electric energy for the charging pile.

For example, the charging network includes the charging pile and the energy storage apparatus; the charging pile is electrically connected to the energy storage apparatus, and the energy storage apparatus is configured to provide the electric energy for the charging pile. The charging pile is electrically connected to the battery apparatus 1100 in the energy storage apparatus through a cable, and the battery apparatus 1100 can provide the electric energy stored by the battery apparatus 1100 for the charging pile. The charging pile is provided with one or more connectors, and the connectors are connected to the electrical apparatus (such as the vehicle 1000), so that energy can be supplemented for the electrical apparatus.

The energy storage apparatus can be located inside the charging pile (such as a storage and charging all-in-one machine) or outside the charging pile.

The above are merely preferred embodiments of the present application, and only specifically describe the technical principles of the present application. These descriptions are only intended to explain the principles of the present application and cannot in any way be interpreted as limiting the scope of protection of the present application. Based on the explanation here, any modifications, equivalent substitutions, and improvements made within the spirit and principles of the present application, as well as other specific embodiments of the present application that can be conceived by those skilled in the art without engaging in creative labor, should be included within the scope of protection of the present application.

## Claims

1. A battery apparatus (1100), comprising:
a box body assembly (1120) having an accommodating cavity (1124);
a battery cell assembly (1110) that is accommodated in the accommodating cavity (1124);
a refrigerant heat exchange component (1130) which is configured to exchange heat with the battery cell assembly (1110) and comprises an inlet and outlet zone (1131), a main flow distribution and collection zone (1132), and a heat exchange zone (1133), in which, the main flow distribution and collection zone (1132) is arranged between the inlet and outlet zone (1131) and the heat exchange zone (1133), a first-flow-direction flow channel (11311) and a second-flow-direction flow channel (11312) that are both for refrigerant circulation are formed in the inlet and outlet zone (1131), a flowing direction of a refrigerant in the first-flow-direction flow channel (11311) is opposite to that of the refrigerant in the second-flow-direction flow channel (11312), the main flow distribution and collection zone (1132) comprises at least one first flow channel (11321) and at least two second flow channels (11322), all the first flow channels (11321) are distributed between all the second flow channels (11322), the heat exchange zone (1133) comprises a refrigerant heat exchange flow channel (11341), the first-flow-direction flow channel (11311) is in communication with the refrigerant heat exchange flow channel (11341) through the corresponding first flow channel (11321), and the second-flow-direction flow channel (11312) is in communication with the refrigerant heat exchange flow channel (11341) through the corresponding second flow channel (11322); and
a connector component (1140) that is connected to the refrigerant heat exchange component (1130) and is in communication with the first-flow-direction flow channel (11311) and the second-flow-direction flow channel (11312).

2. The battery apparatus (1100) according to claim 1, wherein the number of the second flow channels (11322) is an even number, and all the second flow channels (11322) are symmetrically arranged on both sides of all the first flow channels (11321).

3. The battery apparatus (1100) according to claim 1, wherein the first flow channels (11321) each comprise a first flow distribution channel (11323) and a plurality of second flow distribution channels (11324), and the first flow distribution channel (11323) is in communication with the plurality of second flow distribution channels (11324); the first flow distribution channel (11323) extends in a second direction (Y), and each second flow distribution channel (11324) extends in a first direction (X); an end of the first flow distribution channel (11323) away from the second flow distribution channels (11324) corresponds to and is in communication with the first-flow-direction flow channel (11311); and the end of each second flow distribution channel (11324) away from the first flow distribution channel (11323) is in communication with the refrigerant heat exchange flow channel (11341) in the heat exchange zone (1133); and the second direction (Y) is perpendicular to the first direction (X).

4. The battery apparatus (1100) according to claim 1, wherein at least one first-flow-direction flow channel (11311) is arranged, at least two second-flow-direction flow channels (11312) are arranged, and all the first-flow-direction flow channels (11311) are distributed between all the second-flow-direction flow channels (11312).

5. The battery apparatus (1100) according to claim 1, wherein the first-flow-direction flow channels (11311) and the second-flow-direction flow channels (11312) all extend in the first direction (X).

6. The battery apparatus (1100) according to claim 3, wherein the heat exchange zone (1133) comprises two guide flow channels (11332) and a plurality of main heat exchange flow channels (11331); the plurality of main heat exchange flow channels (11331) are arranged and connected in parallel in the second direction (Y), and each main heat exchange flow channel (11331) is distributed between the two guide flow channels (11332) in the second direction (Y); in the first direction (X), each main heat exchange flow channel (11331) is provided with connecting ends which are arranged away from each other, and each second flow distribution channel (11324) is correspondingly connected to one connecting end of each main heat exchange flow channel (11331); and one end of each guide flow channel (11332) is correspondingly connected to the other connecting end of part of the main heat exchange flow channels (11331), and the other end of each guide flow channel (11332) is correspondingly connected to each second flow channel (11322).

7. The battery apparatus (1100) according to claim 6, wherein an intersection zone (11337) is formed at a position where the main flow distribution and collection zone (1132) intersects with the heat exchange zone (1133), and the intersection zone (11337) extends in the second direction (Y); a first node portion (11338) is formed at a position where each second flow distribution channel (11324) is connected to each main heat exchange flow channel (11331), and a second node portion (11339) is formed at a position where the guide flow channel (11332) is connected to the second flow channel (11322); and the first node portions (11338) and the second node portions (11339) are all distributed in the intersection zone (11337).

8. The battery apparatus (1100) according to claim 6, wherein each main heat exchange flow channel (11331) comprises an upstream flow channel (11333) and a downstream flow channel (11334) which extend in the first direction (X) and are arranged at an interval in the second direction (Y), and the upstream flow channel (11333) and the downstream flow channel (11334) are in communication with each other at their ends away from the inlet and outlet zone (1131); and the guide flow channels (11332) are connected to the downstream flow channels (11334), and the second flow distribution channels (11324) are connected to the upstream flow channels (11333).

9. The battery apparatus (1100) according to claim 8, wherein the upstream flow channels each (11333) comprise a plurality of upstream flow sub-channels (11335) which extend in the first direction (X) and are arranged at intervals in the second direction (Y), and all the upstream flow sub-channels (11335) are in communication with each other; and/or, the downstream flow channels (11334) each comprise a plurality of downstream flow sub-channels (11336) which extend in the first direction (X) and are arranged at intervals in the second direction (Y), and all the downstream flow sub-channels (11336) are in communication with each other.

10. The battery apparatus (1100) according to claim 8, wherein the upstream flow channels (11333) in part of the main heat exchange flow channels (11331) are adjacent to and in heat conduction fit with the downstream flow channels (11334) in the adjacent main heat exchange flow channels (11331), and the downstream flow channels (11334) in part of the main heat exchange flow channels (11331) are adjacent to and in heat conduction fit with the upstream flow channels (11333) in the adjacent main heat exchange flow channels (11331).

11. The battery apparatus (1100) according to claim 6, wherein the battery cell assembly (1110) comprises a plurality of battery cell groups (1111), each battery cell group (1111) comprises a plurality of battery cells (1112) stacked in the first direction (X), and the plurality of battery cell groups (1111) are arranged side by side in the second direction (Y); the refrigerant heat exchange component (1130) is provided with a first surface (1135) which is opposite to the battery cell assembly (1110); and a projection zone of each battery cell group (1111) on the first surface (1135) covers at least one main heat exchange flow channel (11331).

12. The battery apparatus (1100) according to any one of claims 1 to 5, wherein the box body assembly (1120) is further provided with a mounting cavity, and the connector component (1140) is at least partially accommodated in the mounting cavity.

13. The battery apparatus (1100) according to any one of claims 1 to 5, wherein the refrigerant heat exchange component (1130) is provided with the first surface (1135) and a second surface which are opposite to each other, and the first surface (1135) is arranged opposite to the battery cell assembly (1110); and the refrigerant heat exchange component (1130) comprises a plurality of mounting holes (1139), and the plurality of mounting holes (1139) are arranged between the first surface (1135) and the second surface in a penetrating manner and avoid the first-flow-direction flow channels (11311), the second-flow-direction flow channels (11312), the first flow channels (11321), the second flow channels (11322), and the refrigerant heat exchange flow channels (11341).

14. The battery apparatus (1100) according to claim 13, wherein in the first direction (X), the plurality of mounting holes (1139) are formed in a middle zone of the refrigerant heat exchange component (1130) and are arranged at intervals in the second direction (Y); and/or, in the second direction (Y), the plurality of mounting holes (1139) are formed in the middle zone of the refrigerant heat exchange component (1130) and are arranged at intervals in the first direction (X); and the second direction (Y) is perpendicular to the first direction (X).

15. The battery apparatus (1100) according to any one of claims 1 to 5, wherein a plurality of cavities (1138) are further formed in the refrigerant heat exchange component (1130), and each cavity (1138) is arranged to avoid the first-flow-direction flow channels (11311), the second-flow-direction flow channels (11312), the first flow channels (11321), the second flow channels (11322), and the refrigerant heat exchange flow channels (11341).

16. A refrigerant heat exchange apparatus, comprising the refrigerant heat exchange component (1130) in the battery apparatus (1100) according to any one of claims 1 to 15.

17. An electrical apparatus, comprising the battery apparatus (1100) according to any one of claims 1 to 15, wherein the battery apparatus (1100) is configured to store or provide electric energy.
